# EUROPEAN PATENT SPECIFICATION

(11) **EP 1 496 434 B1**
(45) Date of publication and mention of the grant of the patent: **23.12.2009**
(21) Application number: 04254117.7
(22) Date of filing: 09.07.2004
(51) Int. Cl.: G06F 11/16

(54) **Fault resilient/fault tolerant computing**
Fehlerbetriebssicheres/Fehlertolerantes Rechnersystem
Système d'ordinateurs résilient aux défaillances/tolerant aux défaillances

(30) Priority: 09.07.2003 US 485383 P
(43) Date of publication of application: 12.01.2005
(73) Proprietor: MARATHON TECHNOLOGIES CORPORATION, Boxboro, MA 01719 (US)
(72) Inventor: Tremblay, Glenn, Excondido, CA 92025 (US); Leveille, Paul, Grafton, MA 01519 (US); McCollum, James, Princeton, MA 01541 (US); Pratt, Mark J., Berlin, MA 01503 (US); Bissett, Thomas D., Shirley, MA 01464 (US)
(74) Representative: Howe, Steven

(56) References cited:
- EP-A- 0 974 912
- US-A- 5 157 663
- FUJITSU-SIEMENS: "PRIMERGY TX200 Dual-Processor Tower Server - Data Sheet" DATA2, [Online] 2 July 2003 (2003-07-02), pages 1-2, XP002364688 Retrieved from the Internet: URL:http://www.geoware.be/documents/ds_pri m-tx200_e.pdf> [retrieved on 2006-01-25]
- FUJITSU-SIEMENS: "Blade Technology for Server Farms - White paper" INTERNET PUBLICATION, [Online] May 2002 (2002-05), pages 1-11, XP002364689 Retrieved from the Internet: URL:http://217.67.135.118/pdf/consolidatio n/bladeservers.pdf> [retrieved on 2006-01-26]

## Description

### CROSS REFERENCE TO RELATED APPLICATION

This application claims priority from U.S. Provisional Application No. 60/485,383, which was filed July 9, 2003.

### TECHNICAL FIELD

This description relates to fault resilient and fault tolerant computing.

### BACKGROUND

Fault resilient computer systems can continue to function in the presence of hardware and software failures. These systems operate in either an availability mode or an integrity mode, but not both. A system is "available" when a hardware failure does not cause unacceptable delays in user access. Accordingly, a system operating in an availability mode is configured to remain online, if possible, when faced with a hardware error. A system has data integrity when a hardware failure causes no data loss or corruption. Accordingly, a system operating in an integrity mode is configured to avoid data loss or corruption, even if the system must go offline to do so.

Fault tolerant systems stress both availability and integrity. A fault tolerant system remains available and retains data integrity when faced with a single hardware failure, and, under some circumstances, when faced with multiple hardware failures.

Disaster tolerant systems go one step beyond fault tolerant systems and require that loss of a computing site due to a natural or man-made disaster will not interrupt system availability or corrupt or lose data.

Typically, fault resilient/fault tolerant systems include several processors that may function as computing elements or input/output processors, or may serve other roles. In many instances, it is important to synchronize operation of the processors or the transmission of data between the processors.

US-A-5,157,663 describes a fault tolerant computer system including two separate computers constituting primary and backup processing systems connected by a high speed communications channel. Each computer includes an input/output engine responsible for handling and receiving all data and asynchronous events on the system, and an operating system engine used to operate on data received from the input/output engine. Identical events are provided to each operating system engine. Because both systems begin at an identical state and receive identical inputs, the operating system engine parts of the systems produce identical outputs and advance to identical states.

### SUMMARY

The invention is defined by the independent claims. A fault tolerant/fault resilient computer system includes a first coserver and a second coserver, each of which includes an application environment (AE) processor and an I/O subsystem processor on a common motherboard. Each of the AE processors has a clock that operates asynchronously to clocks of the other AE processor, and the AE processors operate in instruction lockstep.

The first AE processor and the first I/O subsystem processor communicate with each other through a first shared memory on the first common motherboard. They also may use a signaling mechanism, such as an interrupt bus, that supports asynchronous communications between the first AE processor and the first I/O subsystem processor. The I/O subsystem processors may communicate with each other through a communication link, and may operate in a loosely coupled manner.

Each of the first and second motherboards may be an industry standard motherboard. The first AE processor and the first I/O subsystem processor, which are located on the same motherboard, may run the same or different operating system software. The first AE processor may run operating system software configured for use with computer systems that are not fault tolerant.

The first coserver may include a third AE processor, and the second coserver may include a fourth AE processor. The system may be configured to provide a first fault tolerant system using the first and second AE processors and the first and second I/O subsystems, and to provide a second fault tolerant system using the third and fourth AE processors and the first and second I/O subsystems.

The coservers may be located in different locations to provide disaster tolerance. To this end, the system includes a communications link connecting the first I/O subsystem processor of the first coserver and the second I/O subsystem processor of the second coserver. The locations of the coservers may be spaced by distances as large as 5 meters, 100 meters, or 50 kilometers or more.

The first AE processor may include a first hyperthreaded processor and the first I/O subsystem processor may include a second hyperthreaded processor, with each of the hyperthreaded processors providing multiple logical processors. Similarly, the first AE processor may include a first logical processor of a hyperthreaded processor while the first I/O subsystem processor includes a second logical processor of the hyperthreaded processor.

The first and second motherboards may be included in blades of a blade-based computer system. The blade-based computer system may include additional blades that together provide one or more additional fault tolerant/fault resilient computer systems.

The I/O subsystem processors maintain operation of the AE processors in instruction lockstep. The first motherboard includes a first shared memory that is shared by the first AE processor and the first I/O subsystem processor, the second motherboard includes a second shared memory that is shared by the second AE processor and the second I/O subsystem processor, and the first and second I/O subsystem processors maintain operation of the AE processors in instruction lockstep through use of the first and second shared memories.

The AE processors and the I/O subsystem processors are configured to maintain the AE processors in instruction lockstep by having the first AE processor write first synchronization information to the first shared memory, having the second AE processor write second synchronization information to the second shared memory, having the first I/O subsystem processor retrieve the first synchronization information from the first shared memory, and having the second I/O subsystem processor retrieve the second synchronization information from the second shared memory and provide the second synchronization information to the first I/O subsystem processor. The first I/O subsystem processor uses the first and second synchronization information to determine whether any adjustments must be made to operating states of the first and second AE processors to maintain operation of the first and second AE processors in instruction lockstep, and at least one of the first and second I/O subsystem processors makes any needed adjustments to the operating states of the first and second AE processors.

In addition, the first I/O subsystem processor may provide the retrieved first synchronization information to the second I/O subsystem processor, and the second I/O subsystem processor may use the first and second synchronization information to determine whether any adjustments must be made to operating states of the first and second AE processors to maintain operation of the first and second AE processors in instruction lockstep.

The AE processors may be configured to operate in a first mode in which the AE processors operate in instruction lockstep and a second mode in which the AE processors do not operate in instruction lockstep. The operating mode of the first AE processor may change from the first mode to the second mode in response to I/O activity by the first AE processor, in response to processing of a predetermined quantum of instructions 'by the first AE processor, or in response to entry into an idle processing state by an operating system implemented by the first AE processor. An interrupt may be generated to change the operating mode of the first AE processor from the first mode to the second mode in response to processing of a predetermined quantum of instructions by the first AE processor. The interrupt may be generated when a performance counter that is decremented each time that an instruction is performed reaches zero.

Implementations of the techniques discussed above may include a method or process, an apparatus or system, or computer software on a computer-accessible medium.

The details of one or more of the implementations are set forth in the accompanying drawings and description below. Other features will be apparent from the descriptions and drawings, and from the claims.

### DESCRIPTION OF THE DRAWINGS

FIG. 1 is a block diagram of a fault tolerant system.
FIG. 2 is a block diagram of a fault tolerant system having a flexible association between constituent servers.
FIGS. 3 and 3A are block diagrams of system configurations that provide multiple fault tolerant systems that share .components.
FIG. 4 is a block diagram of a motherboard for a coserver of a fault tolerant system such as the system of FIG. 1 or FIG. 2.
FIG. 5 is a diagram of the components of the software architecture of a fault tolerant system such as the system of FIG. 1.
FIGS. 6A-6D are block diagrams of different operating modes of a fault tolerant system such as the system of FIG. 1.
FIG. 7 is a block diagram of software components of a coserver.
FIG. 8 is a flow chart of a process for satisfying an input/output request.
FIG. 9 is a block diagram of a fault tolerant system.

Like reference symbols in the various drawings indicate like elements.

### DETAILED DESCRIPTION

The fault tolerant system described below operates in instruction lock-step. Instruction lock-step operation occurs when multiple instances of an application environment (AE) perform the same sequence of instructions in the same order. Each AE executes the same sequence of instructions prior to producing an output.

To accomplish this, all operating system inputs to an AE and all outputs of the AE to the operating system are redirected through an input/output (I/O) subsystem. In addition, sources of asynchronous operations by the AEs are removed. Such sources include I/O device interrupts and registers, clock interrupts, and system management interrupts.

### Hardware

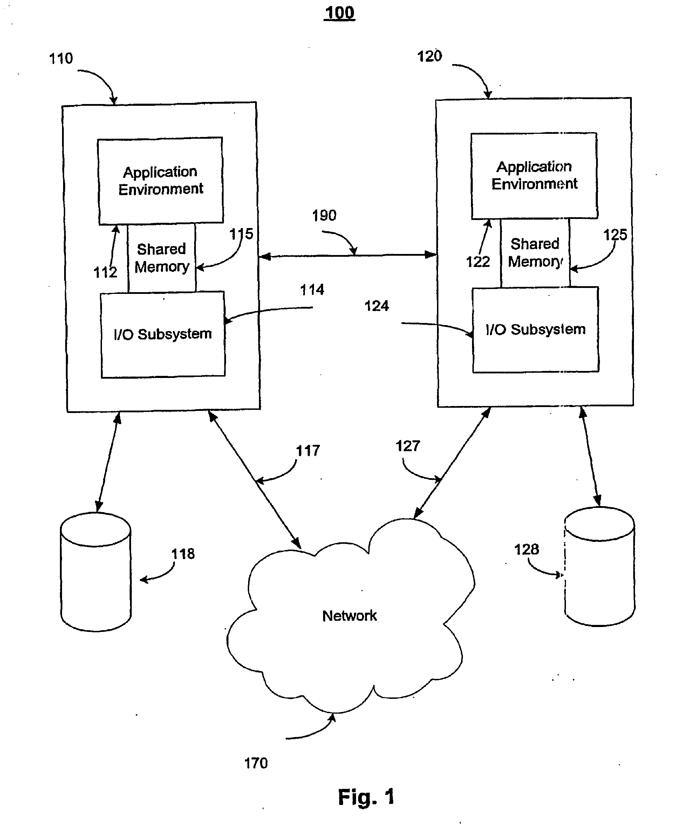

FIG. 1 illustrates a fault tolerant system 100 that includes coservers 110 and 120. The coserver 110 includes an AE 112 and an I/O subsystem 114 in a closely coupled environment, such as a common motherboard. The AE 112 and the I/O subsystem 114 communicate through shared memory 115. Similarly, the coserver 120 includes an AE 122 and an I/O subsystem 124 in a closely coupled environment and communicating with each other through shared memory 125.

In general, a computer system performs two basic operations: (1) manipulating and transforming data, and (2) moving data to and from mass storage, networks, and other I/O devices. Each of the coservers 110 and 120 divides these functions, both logically and physically, between two separate processing environments, with the AEs 112 and 122 manipulating and transforming data, and the I/O subsystems 114 and 124 moving data. In particular, the AEs 112 and 122 process user application and operating system software, and I/O requests generated by the AEs are redirected to the I/O subsystems 114 and 124. This redirection is implemented at the device driver level.

The I/O subsystems 114 and 124 provide I/O processing, data storage, and network connectivity. The I/O subsystems 114 and 124 also control synchronization of the AEs 112 and 122.

To provide the necessary redundancy for fault tolerance, the system 100 includes at least two coservers 110 and 120. The two AEs 112 and 122 operate in instruction lock-step. As noted above, this means that the two AEs 112 and 122 perform the same sequence of instructions in the same order.

The two I/O subsystems 114 and 124 are loosely coupled. In general, this means that the I/O subsystems 114 and 124 cross check each other for proper completion of requested I/O activity, but otherwise operate independently.

In addition to cross checking each other, the I/O subsystems 114 and 124 provide the AEs 112 and 122 with the same data at a controlled place in the instruction streams of the AEs. In addition, the I/O subsystems 114 and 124 verify that the AEs 112 and 122 have generated the same I/O operations and produced the same data output at the same time.

As noted above, all I/O requests from the AEs 112 and 122 are redirected to the I/O subsystems 114 and 124 for handling. The I/O subsystems 114 and 124 run. specialized software that handles all of the fault handling, disk mirroring, system management, and resynchronization tasks required by the system 100.

The coservers 110 and 120 are connected to each other through one or more coserver communication links (CSC) 190. The CSC may be any mechanism that allows messages to be quickly exchanged between the coservers. The CSC 190 may be, for example, based on Gigabit Ethernet cards, on InfiniBand Host Channel Adapters, or on a proprietary backplane interconnect. Communication between coserver 110 and coserver 120 is managed by the I/O subsystems 114 and 124.

The disaster tolerance of system 100 may be improved by locating coserver 120 at a different computing site than the computing site at which coserver 110 is located. For example, an implementation of the CSC 190 using a Gigabit Ethernet channel supporting TCP/IP (Transmission Control Protocol/Internet Protocol) and UDP (User Datagram Protocol) allows for geographical separation of the coservers 110 and 120.

Disks 118 and 128 provide a mirrored disk storage unit, with disk 118 being connected to coserver 110 and disk 128 being connected to coserver 120. The mirrored disk storage unit increases fault tolerance by providing redundant data storage for system 100.

The coservers 110 and 120 are connected to a network 170 through respective communication pathways 117 and 127. The separate pathways 117 and 127 increase fault tolerance by providing redundant access to the network 170. There may be multiple pathways 117 and 127 between the network 170 and coservers 110 and 120. There may also be multiple networks 170, each of which has a pathway 117 or 127 to coserver 110 or 120.

The system 100 uses a software-based approach in a configuration that is based on inexpensive, industry standard processors and motherboards. A coserver 110 is constructed using one processor as an AE 112 and one or more processors as the I/O subsystem 114. These processors have access to shared system memory 115, which is used to support communications between them. They are also connected to a signaling mechanism, such as an interrupt bus, such that the AE processor can asynchronously signal the I/O subsystem processors and vice versa. For example, the coserver 110 may be implemented using a single industry standard server SMP-compliant motherboard containing two or more industry standard processors (such as Pentium 4 processors available from Intel Corporation).

The AEs 112 and 122 together can be viewed as a single computer running a collection of applications along with an operating system. For example, the AEs may run a version of Microsoft Windows® as the operating system. The AEs 112 and 122 each run identical copies of the applications and the operating system in instruction lock-step.

The I/O subsystems 114 and 124 run independent instances of software that enables them to service I/O requests redirected from their respective AEs, as well as software that enables them to maintain instruction lock-step between the AEs, and to detect and handle faults in the system (suitable examples of such software are available from Marathon Technologies Corporation). The I/O subsystem environments also run whatever operating system services are required to support the other I/O devices (e.g., a version of Microsoft Windows®).

The software environment of the coserver 110 is not limited to a single operating system. For example, the AE and the I/O subsystem need not run the same operating system.

The system 100 provides fault tolerance and disaster tolerance as an attribute of the computing system. The AE 110 is designed to run unmodified industry standard applications and operating systems. The system 100 will automatically provide the applications and operating system with the attributes of fault tolerance and disaster tolerance. The operating system for the AE 110 and the operating system for the I/O subsystem 120 operating system can be chosen independently. The operating system for the I/O subsystem 120 can be an embedded or real-time operating system.

In the following description, each I/O subsystem or AE may be referred to as "local" or "remote" based on the relation of the element to one of the coservers (or any element within a coserver). An AE or I/O subsystem may be referred to as "local" to the coserver in which the element resides. For instance, relative to coserver 110, AE 112 may be referred to as a local application environment and I/O subsystem 114 may be referred to as a local I/O subsystem.

An AE or I/O subsystem may be referred to as "remote" relative to a coserver other than the coserver in which the element resides. For example, AE 122 and I/O subsystem 124 are remote relative to coserver 110.

An AE cannot logically exist in a fault tolerant system without its local I/O subsystem. In general, an AE may not be accessed directly by a remote I/O subsystem, nor may an AE directly access a remote I/O subsystem. This characteristic of the AE does not preclude the use of remote DMA (RDMA) I/O devices such as Infiniband to access or modify AE memory 115. Instead, this characteristic dictates that the control of the RDMA device originates from the I/O subsystem rather than the AE.

A coserver 110 or 120 is fully operational only when both its local AE and its local I/O subsystem are operational and the I/O subsystem has access to the devices used by the application and operating system on the AE.

System 100 is fully redundant only when both coservers 110 and 120 are fully operational, the AEs 112 and 122 are synchronized such that they are operating in instruction lock-step, any operations required to mirror data sets 118 and 128 have been performed, and the I/O subsystems 114 and 124 are providing redundant access to the network 170.

The design goal behind system 100 is to produce a low cost, fault-tolerant system. System 100 includes no custom hardware components (e.g., semiconductor, printed circuit boards, computer chassis, power supplies, or cabling). Instead, system 100 is assembled from hardware available from industry standard PC components. Construction of coserver 110 from a single multi-processor motherboard further reduces the cost over prior systems, such as the systems described in U.S. patent 5,600,784, by halving the number of computer chassis in system 100 relative to those systems. Furthermore, the use of onboard shared memory 115 as an interface between AE 112 and I/O subsystem 114 provides a substantially less expensive interface having a higher bandwidth than generally can be achieved by external interfaces.

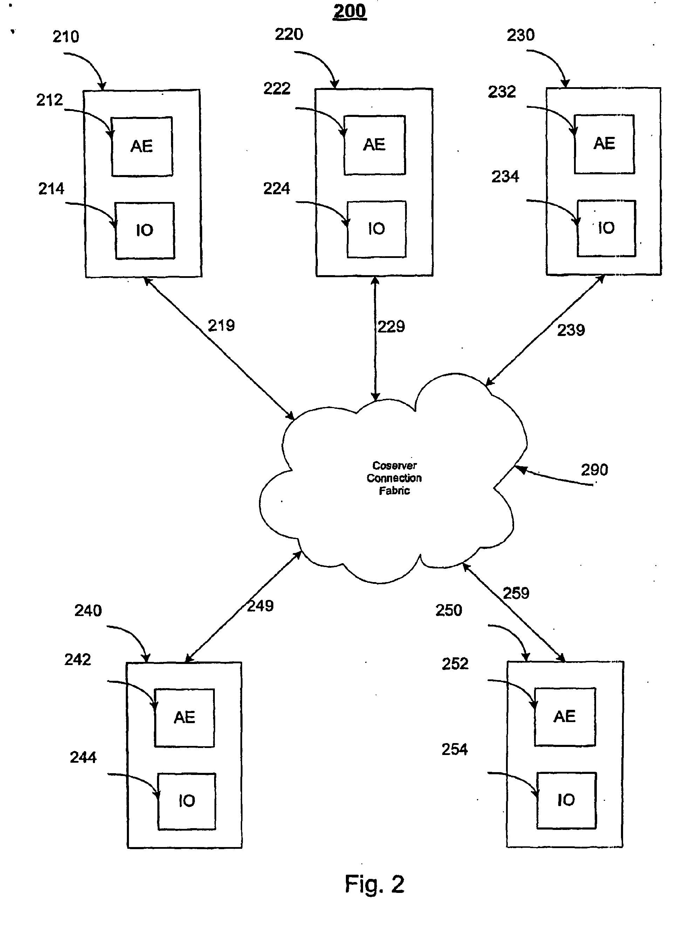

The benefits of a fault tolerant system using coservers that each include an AE and an I/O subsystem in a closely coupled environment such as a single motherboard are not limited to a one-to-one pairing of coservers. For example, FIG 2. shows a fault tolerant system 200 that includes five coservers 210,220,230,240, and 250. Each coserver includes, respectively, an AE 212,222,232,242, or 252 and an I/O subsystem 214, 224, 234, 244, or 254. The coservers are connected to each other through a coserver connection fabric (CCF) 290 by links 219, 229, 239, 249, or 259.

FIG. 2 shows a flexible association between coservers. For example, in one association, coserver 210 and coserver 220 define a first fault tolerant system, while coserver 230 and coserver 240 define a second fault tolerant system. Coserver 250 is an uncommitted spare. If, for example, coserver 230 becomes unavailable, coserver 250 can be used to provide redundancy for coserver 240. Alternatively, coservers 210 and 220 and 230 may define a first fault tolerant system, and coservers 240 and 250 may define a second fault tolerant system. If any of coservers 210, 220, or 230 become unavailable, a two node fault tolerant system remains. If either of coservers 240 or 250 becomes unavailable, then a stand-alone non-fault tolerant system remains.

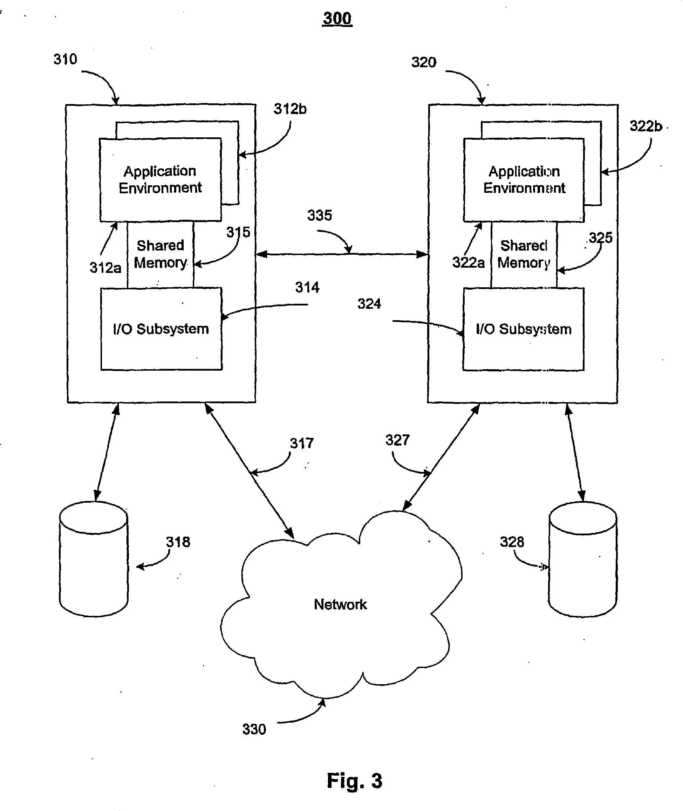

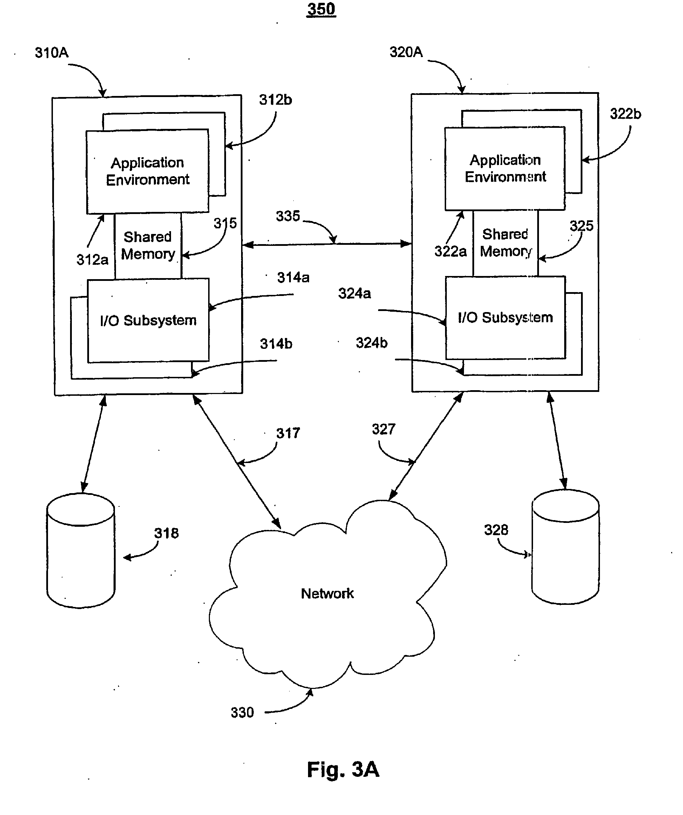

FIG. 3 shows a system configuration 300 that provides a pair of fault tolerant systems using only a single pair of coservers 310 and 320. The configuration 300 differs from the system 100 largely in that each coserver includes two AEs. In configuration 300, a first fault tolerant system is provided by an AE 312a and an I/O subsystem 314 of the coserver 310, and an AE 322a and an I/O subsystem 324 of the coserver 320. A second fault tolerant system is provided by an AE 312b and the I/O subsystem 314 of the coserver 310, and an AE 322b and the I/O subsystem 324 of the coserver 320. Thus, the two fault tolerant systems have dedicated AEs and share common I/O subsystems.

AEs 312a and 312b communicate with I/O subsystem 314 through shared memory 315, and AEs 322a and 322b communicate with I/O subsystem 324 through shared memory 325. In general, the shared memories will include portions dedicated, either dynamically or statically, to each AE.

As shown, each of I/O subsystems 314 and 324 is a member of both fault tolerant systems. By contrast, each AE is a member of a unique fault tolerant system and runs its own operating system and applications.

The I/O subsystems 314 and 324 provide the same set of services independently to each associated AE. In particular, I/O subsystem 314 communicates with a network 330 through a communication link 317, and also communicates with a storage device 318 (and other appropriate I/O devices). Similarly, I/O subsystem 324 communicates with network 330 through a communication link 327, and also communicates with a storage device 328 (and other appropriate I/O devices). The I/O subsystems 314 and 324 communicate with each other using a CSC 335.

Configuration 300 provides a mechanism for scaling the processing power of a fault tolerant system without the strict determinism constraints that are required by symmetric multiprocessing fault tolerant systems. In particular, system configuration 300 can be built with one or more processors serving as a single I/O subsystem and with two or more independent application environments. Thus, while system configuration 300 is shown as providing a pair of fault tolerant systems, other implementations may include a larger number of AEs in each coserver so as to provide a larger number of fault tolerant systems.

FIG. 3A shows an alternate system configuration 350 that provides a pair of fault tolerant systems using only a single pair of coservers 310A and 320A. The configuration 350 differs from the configuration 300 largely in that each coserver includes both two AEs and two I/O subsystems. In configuration 350, a first fault tolerant system is provided by an AE 312a and an I/O subsystem 314a of the coserver 310A, and an AE 322a and an I/O subsystem 324a of the coserver 320A. A second fault tolerant system is provided by an AE 312b and an I/O subsystem 314b of the coserver 310A, and an AE 322b and an I/O subsystem 324b of the coserver 320A. Thus, the two fault tolerant systems have dedicated AEs and I/O subsystems. The I/O subsystems 314a, 314b, 324a and 324b can be single processor or multiprocessor configurations.

The two fault tolerant systems of the configuration 350 share common I/O devices. Thus, I/O subsystems 314a and 314b share a network connection 317 and a storage device 318 (and other appropriate I/O devices), and I/O subsystems 324a and 324b share a network connection 327 and a storage device 328 (and other appropriate I/O devices).

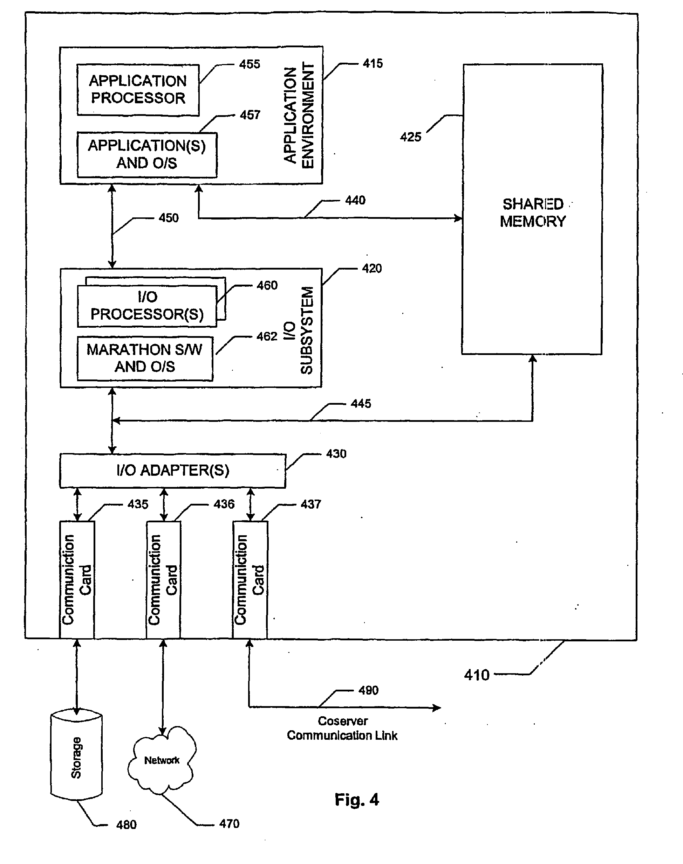

FIG. 4 provides a more detailed view of the elements of a coserver 410. As shown in FIG. 4, the coserver 410 includes an AE 415, an I/O subsystem 420, shared memory 425, and one or more I/O adapters 430 that interface with communication cards 435, 436 and 437. The shared memory 425 is connected to the AE 415 by a memory and I/O bus 440, and to the I/O subsystem 420 by a memory and I/O bus 445. The I/O subsystem 420 also uses the memory and I/O bus 445 to communicate with the I/O adapters 430.

A signaling mechanism 450 supports communications between the AE 415 and the I/O subsystem 420.

The AE 415 includes an application processor 455 and AE applications and operating system 457. Similarly, the I/O subsystem 420 includes one or more I/O processors 460 and I/O subsystem software 462.

The I/O adapters 430 use the communication cards 435-437 to communicate with a network 470, storage 480, and a coserver communication link (CSC) 490 that is connected to one or more coservers (not shown). The I/O adapters 430 may be PCI (Peripheral Component Interconnect), PCI-X, or other adapters or busses supported by the operating system of the I/O subsystem software 462. For example, the I/O adapters 430 may use a SCSI (Small Computer System Interface) adapter 435 to connect to storage 480, an Ethernet Network Interface Card (NIC) 436 to connect to network 470, and a Gigabit Ethernet card 437 to connect to the CSC 490. Different implementations may use other communication cards and I/O adapters, and may connect to other I/O devices.

When the coserver powers up or resets, the I/O processors 460 boot and load the I/O subsystem software environment 462. The I/O subsystem then uses the interprocessor signaling mechanism 450 and shared memory 425 to either boot the AE 415 or synchronize the AE 415 with the AE of the other coserver.

In one implementation, the coserver 410 is implemented using a Fujitsu Siemens TX200 computer (and a fault tolerant system is implemented using a pair of such computers). The TX200 is a standard server 410 with two Intel Pentium 4 Xeon class processors that serve as the application processor 455 and the I/O processor 460, four memory slots that provide the shared memory 425, on-board gigabit Ethernet that provides the communication card 437 for the coserver communication link 490, an on-board SCSI disk controller that serves as the communication card 435, and available PCI slots for installing communication cards 436 (which can be industry standard gigabit Ethernet cards) to connect with external network 470.

Another implementation of the TX200 uses hyper-threaded processors available from Intel. In general, a hyperthreaded processor is a physical processor that implements multiple logical processors, with each logical processor having its own register set. In this case, each physical processor implements two logical processors so as to permit implementation of a system such as is shown in FIG. 3. In particular, the two logical processors serve as the processors 312a and 312b that run the two AEs.

Similarly, the two logical processors of the second processor of the TX200 provide two logical I/O processors that both reside in the same physical package and form a symmetric multiprocessing I/O subsystem. As such, they may be used in implementing a system such as the system of FIG. 3A, with the two logical processors providing the two I/O subsystems 314a and 314b. In this implementation, the storage and communication cards of the TX200 can be shared between I/O subsystems or spare PCI slots of the TX200 can be populated with cards that are dedicated to specific I/O subsystems.

Another implementation uses a smaller server computer, such as the Fujitsu Siemens TX150 computer. Referring to FIG. 4, the TX150 is a standard server (e.g., coservr 410) with one Intel Pentium 4 Xeon hyper-threaded processor, four memory slots (that provide the shared memory 425), on-board gigabit Ethernet (that provides the communications card 437), an on-board IDE disk controller (that provides the communications card 435), and available PCI slots for installing communication cards 436, such as industry standard gigabit Ethernet cards, to connect with the external network 470. Inside the hyper-threaded processor package, one logical processor is used as the application processor 455 and the other logical processor is used as the I/O processor 460.

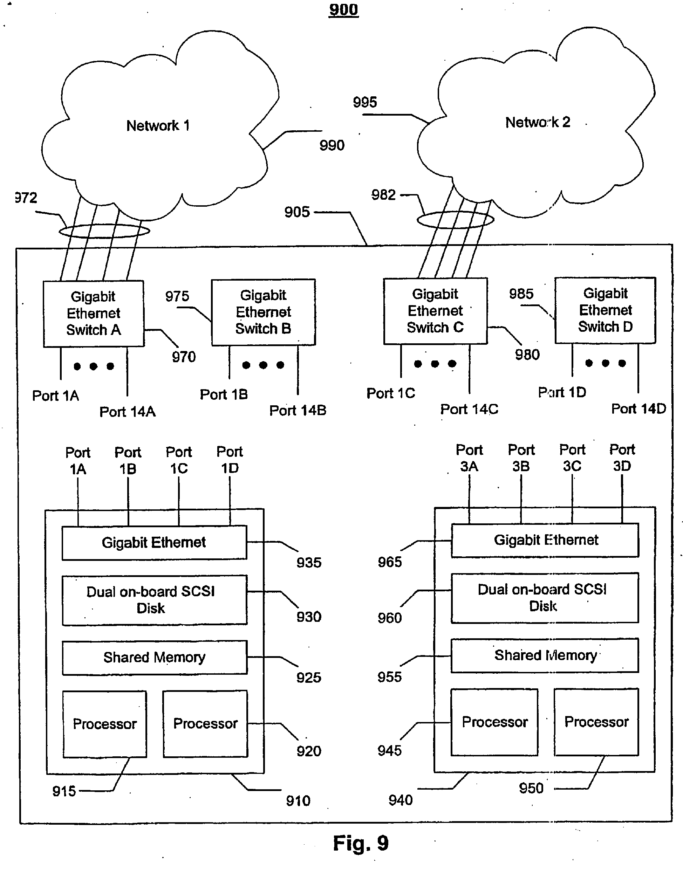

FIG. 9 illustrates another implementation that is implemented using a blade computer 905, such as the IBM BladeCenter rack mount computer. The BladeCenter is a 7U (12.25 inch high), 19 inch wide rack chassis with fourteen hot plug blade slots in the front. FIG. 9 illustrates two processor blades 910 and 940 of the fourteen blades that may be included in the system. Each of blades 910 and 940 may be one or two slots wide. The mid-plane of the chassis (represented by Port 1A through Port 14D) connects each of the fourteen blade slots with four hot-pluggable, rear-mounted switch modules 970, 975, 980, and 985. Each switch module has up to four connections 972 or 982 to external networks 990 and 995.

In one implementation, processor blades 910 and 940 are provided by HS20 dual slot wide blades installed in slot 1 (blade 910) and slot 3 (blade 940). The application environment on blade 910 in slot 1 includes a processor 915 and shared memory 925, and the I/O environment on blade 910 includes a processor 920, shared memory 925, on-board SCSI disks 930, and gigabit Ethernet controllers 935. As shown in FIG. 9, two gigabit Ethernet links at Ports 1A and 1C are used to connect to external networks 990 and 995, respectively. Gigabit Ports 1B and 1D are used as coserver communication links to the I/O environment on blade 940 in slot 3.

Blade 940 is configured like blade 910. In particular, the application environment on blade 940 includes a processor 945 and shared memory 955, and the I/O environment on blade 940 includes a processor 950, shared memory 955, on-board SCSI disks 960, and gigabit Ethernet controllers 965. Two gigabit Ethernet links at Ports 3A and 3C are used to connect to external networks 990 and 995, respectively. Gigabit Ports 3B and 3D are used as coserver communication links to the I/O environment on blade 910 in slot 1.

When the blades are two slots wide, the BladeCenter 905 can support three fault tolerant blade pairs with a seventh blade as an uncommitted spare. There is no special cabling to create this configuration. All interconnections between blades is contained in the standard mid-plane of the chassis. The connections are automatically set up by the switches 970, 975, 980 and 985 based on the IP addresses that are assigned to the gigabit Ethernet ports on each blade and the IP addresses that are used in the packets being sent. In the event of a failure, the spare blade can be assigned to replace the faulted blade. The faulted blade is removed and a replacement blade is inserted in the chassis. The position of the blades in the chassis is not fixed. The gigabit ethernet switches automatically reconfigure based on the assigned IP addressing.

The BladeCenter may be arranged in other configurations. For example, a one slot wide HS20 can be configured with four gigabit Ethernet ports and a single IDE disk drive, and the external Ethernet networks 990 and 995 can be used to host NAS (network attached storage). This allows up to seven fault tolerant blade pairs to reside in a single chassis 905. A mixture of one slot and two slot blades also can be used in a single chassis, and a mixture of fault tolerant and non-fault tolerant blades can coexist in the same chassis.

### Software Architecture

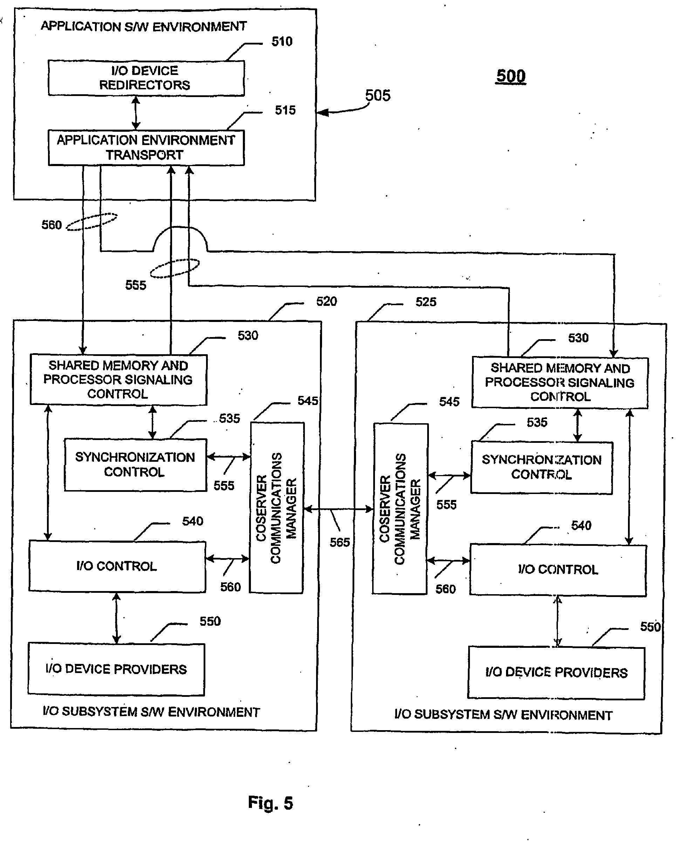

FIG. 5 depicts the components of a software architecture 500 implemented by a fault tolerant system such as the system 100 of FIG. 1. The components interact with each other to maintain an instruction lock-stepped application environment 505 that is capable of sustaining an application and operating system services. For purposes of interactions with other components of the system, the application software environment 505 includes I/O device redirectors 510 and an application environment transport 515.

In a fully redundant system, the image of the application environment 505 is physically resident on two AEs (e.g., AEs 112 and 122 of FIG. 1). However, since the environment is run in instruction lock-step between the AEs 112 and 122, the application software environment is a single logical entity and, accordingly, is represented as a single component 505 in FIG. 5.

The software components that provide I/O services on behalf of the application environment 505 are supplied by I/O subsystem software environments 520 and 525. These environments are made up of identical software components, but are run as separate entities physically resident on two different I/O subsystems (e.g., I/O subsystems 114 and 124 of FIG. 1). Therefore, the I/O subsystem software environments are represented as separate components 520 and 525 in FIG. 5. The environments 520 and 525 also cooperate to provide services to maintain instruction lock-step in the application environment 505.

The instantiation of the application environment 505 on each of the coservers communicates with the I/O subsystem environments 520 or 525 on the respective coservers through shared memory managed by shared memory and processor signaling control components 530 of each of the I/O subsystem environments.

Each of the I/O system environments also includes a synchronization control 535 and an I/O control 540, both of which communicate with a coserver communication manager 545 that is also part of the I/O system environment. The I/O control 540 also communicates with I/O device providers 550.

The I/O device providers 550 perform the I/O device access requested by the I/O device redirectors 510. The I/O device providers 550 also coordinate the synchronization of I/O device state when a second coserver 525 joins with the operational coserver 520.

The lock-stepped application environment 505 is maintained by two separate but cooperating packet-based protocols: a synchronization protocol 555 and an I/O protocol 560. The synchronization protocol 555 exchanges low-level state information between the two AEs. This state information is used to maintain the system time between the AE processors, compensate for non-deterministic behavior that may be exhibited by the AE processors, and detect conditions indicating that one of the elements in the protocol pathway (i.e., an AE or one of its software elements, an I/O subsystem or one of its software elements, or the CSC) is faulty.

In the AE synchronization protocol 555, synchronization information is provided by the AE transport 515 on each coserver and written to shared memory accessible by I/O components in the I/O subsystem environment 520 or 525 on the corresponding coserver. The AE synchronization control component 535 on each coserver then exchanges its synchronization information with the other server using a logical CSC 565 managed by the coserver communications manager 545. This exchange results in aggregate synchronization information that is returned to the AE transport 515 on each AE. The AE transport uses this aggregate information to make any adjustments to the physical AE processor state that are needed to ensure that instruction lock-step is maintained.

The I/O protocol 560 performs a number of functions. For example, the protocol is used to ensure that I/O requests issued by the application or operating system supported by the application software environment 505 are properly routed to the appropriate physical device or devices required to fulfill the request.

The I/O protocol 560 is also used to ensure that I/O requests issued by the two instances of the application environment 505 are identical. Since the instances are lock-stepped, the I/O requests must be identical in the absence of a fault condition. As such, the I/O protocol 560 also ensures that differences in I/O requests are detected and reported to fault handling entities (not shown).

The I/O protocol 560 cross-compares responses from mirrored I/O devices, such as disks, to ensure accuracy. The I/O protocol then delivers verified responses back to the two instances of the application environment 505 at identical junctures in the lock-stepped instruction stream. When differences in responses from mirrored devices are detected, the I/O protocol reports those differences to fault handling entities.

The I/O protocol 560 replicates responses from non-mirrored devices, such as network cards, in both coservers. The I/O protocol then delivers the replicated responses back to the two instances of the application environment 505 at identical junctures in the lock-stepped instruction stream.

The I/O device redirectors 510 intercept I/O requests issued by the application or operating system under the application environment 505. I/O requests are repackaged by the I/O redirectors 510 and delivered to the AE transport 515 for further processing. Processing of an I/O request in the application environment 505 is suspended while the request is processed by the I/O protocol 560. The instance of the AE transport on each coserver then uses an inter-processor signaling mechanism to inform the I/O control components 540 on their local coservers that there is at least one I/O request waiting to be processed.

I/O handling policies interpreted by the I/O control component 540 determine whether a request is replicated to the remote server or is simply cross-compared with a presumably identical request generated by the application environment 505 on the remote server. I/O requests are then passed from the I/O control component 540 to the appropriate I/O device provider 550. The device provider 550 then interfaces with the low-level device driver associated with the physical device that is the target of the request to initiate processing of the request.

The I/O device provider 550 also interfaces with the low-level driver to prepare a response for consumption by the application environment. When a response is received from a physical device, the corresponding I/O device provider 550 notifies the local I/O control component 540 that a response is available. The I/O control component then consults its policies and the current system state to determine whether the response should be (a) replicated to the remote coserver (in the case of a non-mirrored device), or (b) cross-compared to an identical response expected to be generated by the remote coserver (in the case of a mirrored device). In either case, the CSC 565 is used to convey the response to the remote server or to cross-compare information regarding the response with the remote server.

When a response is either replicated or verified, the I/O control component 540 and the AE transport 515 on each coserver cooperate to deliver the response back to the appropriate I/O device redirector 510 such that the delivery occurs at the same point in the instruction streams of the application environments 505 on each coserver, thus preserving instruction lock-step. The I/O device redirector 510 then delivers the response back to the original requestor in the application or operating system under the application environment, thus resuming the request that was pending when I/O processing for the request was begun.

### Operating Modes

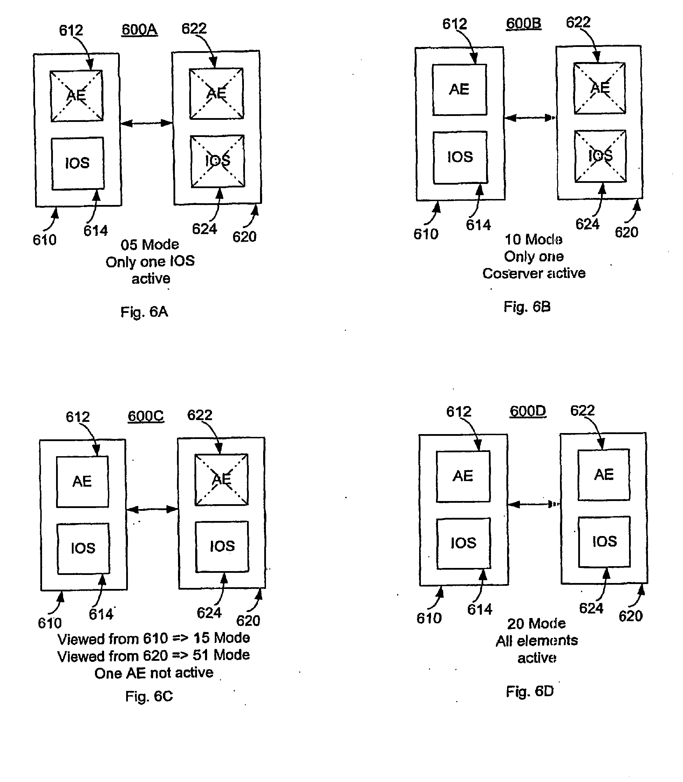

FIGS. 6A-6D show different operating modes of a fault tolerant system. Each of FIGS. 6A-6D illustrates a system 600 that includes a coserver 610 that includes an AE 612 and an I/O subsystem 614, and a coserver 620 that includes an AE 622 and an I/O subsystem 624.

In the system 600A of FIG. 6A, only I/O subsystem 614 is operational. As such, the system 600A is said to be operating in the 05 Mode. In general, the 05 Mode is a mode that the system enters upon initial startup.

In the system 600B of FIG. 6B, both AE 612 and I/O subsystem 614 are operational such that the coserver 610 is operational. As such, the system 600B is said to be operating in the 10 Mode. A system operating in the 10 Mode, though not fault tolerant, is otherwise fully functional.

In the system 600C ofFIG. 6C, both the coserver 610 and the I/O subsystem 624 are operational. As such, the system is said to be operating in the 15 Mode from the perspective of coserver 610, and in the 51 Mode from the perspective of coserver 620.

In the system 600D of FIG. 6D, both the coserver 610 and the coserver 620 are fully operational. As such, the system is said to be operating in the 20 Mode.

### Software Components

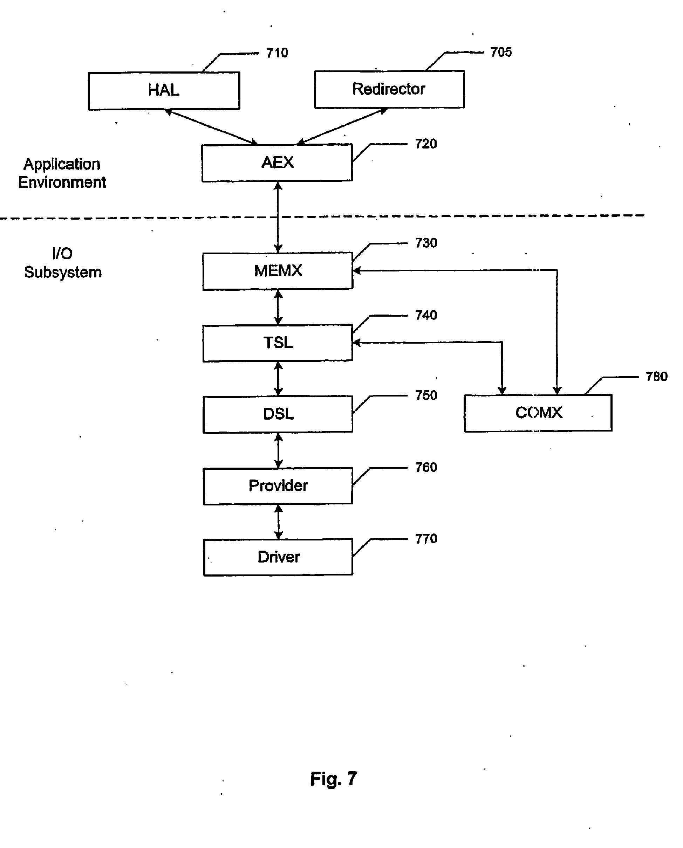

FIG. 7 is a diagram of the major software components of the coserver 410 of FIG. 4. As shown, the software in the AE 415 includes redirectors 705 that run as part of the AE application and O/S 457, a Hardware Abstraction Layer (HAL) 710, and an Application Environment Transactor (AEX) 720.

Each redirector 705 captures activity for a class of I/O device (e.g., SCSI, Ethernet or keyboard) and redirects that activity (called a transaction) from the AE 415 to the I/O subsystem 420 using the AEX 720. For example, a request for a SCSI read from a mirrored disk is captured by a redirector 705 and passed to the AEX 720. The HAL 710 traps references to standard platform devices, such as the real-time clock, and handles them in much the same way as the redirectors 705 handle I/O activity.

Upon receiving a transaction from a redirector 705, the AEX 720 creates a packet descriptor (PD) for the transaction in the shared memory space 425 between the AE 415 and the I/O subsystem 420. The PD contains a header describing the PD, a command payload field describing the request, and a pointer to a data payload buffer. The header contains a unique transaction number, checksums over the command fields, the data payload buffer and the header, and local storage fields for each major software component that operates on the PD. The local storage fields act as a scoreboard where all knowledge of the status of the PD is stored during the various stages of processing. AEX 720 uses shared memory 425 to pass a pointer to the PD to MEMX 730, which is a component of the software 462 of the I/O subsystem 420.

MEMX hands the transaction PD (initially referred to as a request PD) on to the transaction synchronization layer (TSL) 740, which is another component of the software 462 of the I/O subsystem 420. The TSL is responsible for routing the transaction request according to the state of the fault tolerant machine. When the system is in the 20 Mode (as shown in Fig. 6D), the TSL 740 verifies that the AEs are requesting the same transaction by swapping the transaction number and the checksums with the other coserver through a communications channel (COMX) 780 that employs the coserver communication link 490.

Upon confirming that the same transaction is being requested, the TSL 740 hands the request on to the device synchronization layer (DSL) 750, which is another component of the software 462 of the I/O subsystem 420. The DSL 750 is responsible for routing the requests based on the state and type of the I/O device that is being handled. The DSL 750 handles devices based on the I/O policy for each device, where the different I/O policies include single-ended, active/standby, single responder, and active/active.

The single-ended I/O policy is applied to a singular device, such as a CDROM. With such a device, all device failures are visible to the application.

The active/standby I/O policy applies when one copy of the device is active at any given time. If the active device fails, the standby device is used transparently to the application. Ethernet is one example of an active/standby device.

The single responder I/O policy applies when two copies of the device exist and are maintained by the I/O subsystem, but only one copy is the source of read data. In the event of a failure, the other copy is used transparently to the application. A mirror set disk drive is treated as a single responder when one I/O subsystem is disabled or when the mirror set is not current.

The active/active I/O policy applies when two copies of the device are active at the same time. Each I/O subsystem operates independently on its own copy with automatic checking and transparent fall back to the single responder mode in the event of a failure. A mirror set disk drive is treated as active/active when both I/O subsystems are available and the mirror set is current.

Based on the I/O policy for the device involved in the request, the DSL 750 routes the request PD to the proper provider 760. The provider 760 recreates the request as originally captured by the redirector 710 and calls an appropriate driver 770 to satisfy the request. The response from the driver 770 is captured by the provider 760 in the request PD. The checksum fields are updated and the PD is now considered a response PD.

The response PD is handed back to the DSL 750, which hands the PD back to the TSL 740. TSL 740 routes the response PD based on device state and machine state. Thus, for the simple example of a SCSI read from a mirrored disk, a copy of the SCSI device exists in both coservers 110 and 120. Therefore, the original request PD in both coservers has been updated with response data without any handling by the TSL 740, which hands the response PD back to MEMX 730.

MEMX 730 is responsible for validating that both coservers have identical data in the response PD. To this end, MEMX 730 uses COMX 780 to swap checksums between the coservers 110 and 120. MEMX is also responsible for maintaining synchronization in the AEs 112 and 122 by providing synchronous input to the AEs. MEMX uses COMX 780 to exchange the transaction numbers for response PDs that have been handed back to MEMX by the TSL 740. On the next freeze cycle (described below), MEMX provides AEX 720 with a sanitized list (freeze list) of the transactions that have completed in both I/O subsystems 114 and 124.

Upon determining that the transaction is on the freeze list, AEX 720 hands the response PD back to the original redirector 705. The redirector 705 extracts the response data from the PD and handles it accordingly to complete the I/O transaction.

MEMX 730 creates a transaction acknowledge (TACK) for every transaction that is on the freeze list. The TACKs are used by the TSL 740 and the DSL 750 to direct which PDs have had their transactions completely processed. All request PDs are tracked with scoreboard entries from their creation until they are returned back to AEX 720 as a response PD. The scoreboard entries are cleared once the TACK is received for a PD. **AE Operation - Meta-Time and Divergent Processing**

As discussed above, AEs 112 and 122 operate in instruction lockstep. Each of AEs 112 and 122 executes instructions based on the clock system, memory contention, and cache of its own coserver 110 or 120. Thus, each AE is executing the same instruction stream on the same data but with a unique real-time profile. As a result, each AE requires a different amount of wall clock time to execute the same instruction stream, but the passage of time or the meta-time as viewed by each AE is the same.

The I/O subsystems 114 and 124, as a result of their asynchronous interfaces with the I/O devices, create asynchronous disturbances in the timing of memories 115 and 125, respectively. This, in turn, causes variations in the contents of the cache memories of AEs 112 and 122.

The AEX 720 maintains instruction lockstep operation by dividing all in struction execution in an AE into two categories: divergent and meta-time. During divergent processing, each AE is allowed to execute its own unique instruction stream. That divergent instruction stream is contained entirely in AEX 720 and deals with the interface handshake with MEMX 730. Meta-time is the instruction lock-step instruction stream that is executed on both AEs.

The transition from meta-time to divergent processing is controlled by three mechanisms: Quantum Interrupts (QIs), I/O activity by the application or operating system, and the idle process. A QI, which is the first entry into divergent processing, is an interrupt driven by the processor performance counters. At the start of meta-time operation, AEX 720 loads the QI performance counter with a value that represents a quantum of work that is to be done by the processor. As the processor executes instructions, the performance counter is decremented. When the performance counter passes zero, the interrupt is requested. This results in an imprecise interrupt in the instruction streams of AEs 112 and 122. The impreciseness is due to the timing and cache inconsistencies in meta-time.

In response to a QI, each AEX 720 enters divergent processing and must determine which AE has executed the most instructions. To this end, the AEX 720 instructs the MEMX 730 to exchange performance counter and instruction pointer data with the other coserver. MEMX 730 uses COMX 780 to exchange the data. At the end of the exchange, each AEX 720 knows which AE has executed farther into the instruction stream. The AEX 720 that is behind then single steps forward to the same place in the instruction stream so that both AEs have executed the same quantum of instructions and are at the same instruction pointer. This procedure ensures instruction synchronous entry into divergent processing.

A second entry into divergent processing occurs when the operating system executes its idle loop. The means that any application that was running completed the processing that it could do on its current data and returned control back to the operating system. Since this is a synchronous event, no instruction pointer or performance counter data needs to be swapped between the AEs. As it also represents a time period where nothing useful is happening in the system, it is used as the end of the current meta-time cycle. Subsequent injection of time updates and I/O completions allow the operating system to reschedule activities.

A third entry into divergent processing occurs when I/O operations are performed by the application or operating system on the AE 112 and 122. Since there are no I/O devices attached to an AE, all I/O is handled by either the redirectors 705 or trapped as an entry of the HAL 710. I/O operations are inherently synchronous because they are the direct result of an instruction being executed, and, accordingly, no instruction pointer or performance counter data needs.to be swapped between the AEs 112 and 122. In particular, the entry into AEX 720 as a result of an I/O operation is either due to a call from a redirector 705 or due to a trap entry into the HAL 710 that results in a call into AEX 720. This entry into divergent processing will terminate a meta-time cycle only if a sufficient quantum of work has been performed in the current cycle.

The goal in scheduling divergent processing is to minimize overhead while providing low latency to I/O operations. Frequent meta-time cycles will reduce I/O latency at the expense of overhead. Synchronous entries into divergent processing context, however, are much less costly than the asynchronous entries that result from the expiration of the QI counter.

### Freeze Protocol

MEMX 730 is responsible for presenting I/O responses to AEX 720 synchronously and in matching order. AEX 720 is responsible for determining when those responses will become visible. I/O responses are frozen from visibility by the AEs 112 and 122 during the freeze cycle. At the termination of the divergent processing cycle, MEMX 730 presents a sorted and synchronized list of I/O responses to AEX 720. To do this, MEMX on coserver 110 runs a freeze protocol with MEMX 730 on coserver 120 using COMX 780 as the communication link.

In each of coservers 110 and 120, MEMX 730 maintains a list, referred to as a freeze eligible list, of the I/O responses that have been returned by the TSL 740. On a periodic basis, MEMX 730 in coserver 110 exchanges its freeze eligible list with MEMX 730 in coserver 120 using their respective COMX 780. Each MEMX 730 finds the common entries in the two freeze eligible lists and presents this freeze list to AEX 720 at the termination of the current meta-time cycle. AEX 720 is now allowed to process the freeze list of I/O responses during the next freeze cycle. Each MEMX 730 also removes the freeze list entries from the freeze eligible list.

MEMX 730 can run the freeze protocol in response to a demand by AEX 720 or on a predictive basis. AEX 720.demands a freeze cycle whenever it processes a QI from the performance counters. Processing a QI means that the current thread of execution has not been disrupted for many tens of milliseconds. Once AEX 720 has aligned the instruction streams after swapping the performance counters through MEMX 730 and COMX 780, the system time and I/O responses need to be updated from the freeze protocol.

Another demand time is when AEX 720 is entered from the system idle loop. The operating system has no further work that can be performed. All threads of execution have completed or are waiting for the passage of time or the completion of I/O. The infusion of time or I/O is required to allow the operating system to activate another thread.

MEMX 730 can run the freeze protocol on a predictive basis to eliminate waiting on the part of AEX 720. Based on the time since the last freeze cycle or on the number of entries in the eligible freeze list, MEMX 720 can initiate the freeze protocol and have the freeze list waiting for the AEX 720 when the AEX 720 indicates the end of the current meta-time cycle. The goal is to return the AE into meta-time processing as fast as possible. Only during meta-time processing does the AE execute any applications.

### Request / Response Handling

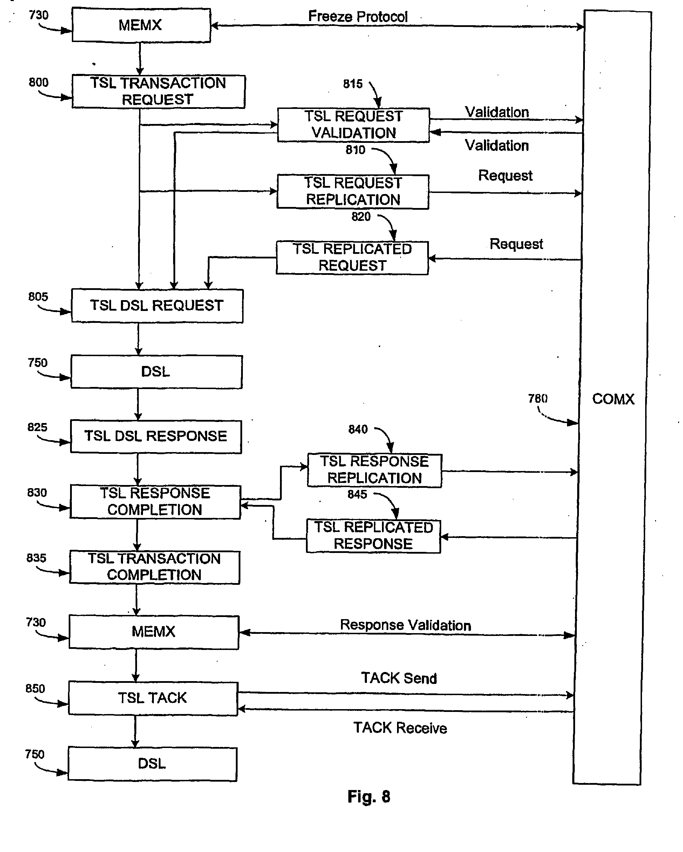

FIG. 8 provides a more detailed description of the flow of packet descriptors (PDs) in the I/O subsystem relative to the coordination of system state change. In particular, FIG. 8 illustrates operations of four primary components: MEMX 730, TSL 740, DSL 750 and COMX 780. As discussed above, MEMX 730 is responsible for synchronizing communications with the AE (not shown). As also discussed above, TSL 740, which is represented by TSL components 800-850 in FIG. 8, routes I/O transactions based on system state, while the DSL 750 is responsible for implementing the I/O policies based upon coserver and I/O device states. Finally, COMX 780 is responsible for all communications with the remote coserver (not shown).

Each component of the TSL can be considered to consist of three parts: an input queue, a processing block, and an output gate. For example, the TSL Transaction Request component 800 has an input queue that receives transaction request PDs from MEMX 730, a processing block that decodes the request and routes the decoded request according to the current state of the system, and an output gate that signals that there are no partially processed PDs in the component 800. The output gate may signal that there are no partially processed PDs in the component 800 when the input queue of the component 800 contains PDs that have not yet been processed, as long as all other PDs have passed through the output gate and are in the input queues of some other block.

In one example, MEMX 730 accesses request PDs in shared memory 115 (between AE 112 and I/O subsystem 114). PDs related to the freeze protocol and QI alignment are handled through an interface between MEMX 730 and COMX 780. The remaining transaction request PDs are handed on to the TSL Transaction Request component 800.

MEMX 730 uses COMX 780 to communicate with MEMX in the other coserver (not shown) to handle the freeze protocol and QI alignment requests. MEMX in the other coserver returns responses to MEMX 730 through COMX 780.

TSL Transaction Request component 800 routes the request based on the system state (i.e., 10 Mode, 15 Mode, or 20 Mode). In 10 Mode, the local coserver is the only active component in the system and the PD is routed to a TSL DSL Request component 805, and also sets a response mode flag in the PD to indicate that this is a single responder I/O request. For 15 Mode and 20 Mode, the component 800 does not set the single responder flag.

In 15 Mode, the operational components of the system include the local coserver and only the remote I/O subsystem of the other coserver. Since the remote AE does not exist, the complete PD, including the data payload, must be transferred over to the remote I/O subsystem. This is accomplished by a TSL Request Replication component 810. Additionally, the PD is sent to the TSL DSL Request component 805 for local processing.

In 20 Mode, the PD must be verified between the two operational AEs. To this end, the PD is routed to a TSL Request Validation component 815 that swaps a compressed version of the PD with the other coserver using COMX 780. The PD from the local AE needs to be verified against the stream of PDs from the remote AE. Since the AEs are operating in lockstep, the PDs should occur in the same order and contain the same contents. Rather than transfer the entire PD, including the data payload, over to the remote coserver, a significantly compressed version of the PD is sent over using a unique identifier for the PD and a set of checksums. Typically, one checksum is calculated over the data payload, another checksum is calculated over the command, and a third checksum is calculated over the PD structure.

COMX 780 sends the outgoing validation request to the remote coserver. COMX 780 also receives incoming validation requests from the COMX of the remote coserver and hands this data to the TSL Request Validation component 815, which compares the outgoing validation request against the incoming validation request. The compressed data should match, and any mismatch between the two represents a fault in the system that needs to be addressed. When the validation requests match, the PD is sent to the TSL DSL Request block 805.

In 15 Mode, the TSL Request Replication component 810 replicates the entire PD, including the data payload, and provides the replicated PD to the remote coserver using COMX 780.

When COMX 780 receives a replicated PD from the remote coserver, the PD and its payload are stored in memory owned by the local coserver. The replicated PD is handed to a TSL Replicated Request component 820 that passes the PD on to the TSL DSL Request component 805.

The TSL DSL Request component 805 is the input interface to the DSL 750, which, as noted above, is responsible for implementing the I/O policies for each system device. For active/standby devices such as Ethernet, the DSL on one coserver executes the I/O request while the DSL on the other coserver returns a response marker indicating that it has received the request but is not responsible for the operation. In the event of a device failure, the DSL on each coserver is reconfigured to use the non-faulted device.

For single ended devices like a CDROM, the DSL responds in the same as with active/standby devices. However, when a single ended device fails, there is no recovery at the DSL level and the device failure is reported back to the application originating the request.

For replicated devices like mirrored disks, the DSL handles the request identically on both coservers.

If the local DSL is handling the I/O request, the request is passed on to the appropriate provider. The DSL includes a response from the provider as part of the PD and data payload that the DSL provides to a TSL DSL Response component 825. The PD is now considered a response PD rather than a request PD. Note that a response PD can be either an actual response as a result of the I/O request, or it can be a response marker indicating that the DSL 750 in the local coserver is not responsible for servicing the I/O request. In the case of a response marker, the remote coserver is expected to provide the actual response PD. The DSL includes in the response PD a set of response mode flags that indicate whether the PD is a response marker or an actual response. The response mode flags also indicate how many responses (e.g., a single response or, in the case of an active/active device, two responses) are expected and which coserver is providing the response. The TSL DSL Response component 825 routes the response PD to a TSL Response Completion component 830.

The TSL Response Completion component 830 routes the PD according to the system state and the response mode flags. For example, 10 Mode requires no response replication since the local coserver is operating in standalone mode. Accordingly, the response PD is handed on to a TSL Transaction Completion component 835.

For 51 Mode, the response PD needs to be copied to the remote coserver. To this end, the TSL Response Completion component 830 hands the PD to a TSL Response Replication component 840 that makes a copy and provides it to the remote coserver through COMX 780. In addition, the local coserver needs to know that the remote coserver has completed the I/O request in order to track outstanding requests. For this purpose, a TSL Replicated Response component 845 that communicates with the COMX 780 provides the TSL Response Completion component 830 with the response marker or the actual response that indicates that the remote coserver has a response PD.

For 15 Mode, since there is no remote AE, the response PD does not need to be copied to the remote coserver. However, the response from the remote coserver (either in the form of a response marker or an actual response) is needed to complete the transaction. Locally, this response is provided by the TSL Replicated Response component 845.

For 20 mode, the local and remote coservers need not trade any form of response PD using the TSL Response Replication component 840 unless the remote coserver needs an actual response. For an active/active device such as a disk read access, each coserver reads its own disk independently. For single ended devices or active/stand-by devices, only one coserver (e.g., the local coserver) will provide the actual response. Accordingly, the actual response PD needs to be copied to the other coserver.

The TSL Response Replication component 840 uses COMX 780 to provide the remote coserver with either a complete response PD or a response marker indicating that the response PD exists on the local coserver. The complete PD is only copied when the remote coserver does not have an actual response PD of its own. The response marker is copied when the local coserver is in 51 Mode and the remote coserver does not need an actual PD. The response marker is used to regulate the speed of the 15 Mode server. The 51 Mode coserver is slower than the 15 Mode coserver because the request PDs are received indirectly from the remote coserver through COMX 780 rather than from the local AE's shared memory. Response information from the remote coserver is received by COMX 780 and passed on to the TSL Replicated Response component 845, which presents the remote response information to the TSL Response Completion component 830.

The TSL Response Completion component 830 merges the local response PDs from the TSL DSL Response component 825 and the remote response PDs from the TSL Replicated Response component 845. In 15 Mode, both local and remote responses must be available before the actual response PD is forwarded to the TSL Transaction Completion component 835, which serves to slow the 15 Mode coserver down to the speed of the remote coserver. This also ensures that both coservers agree on the I/O processing being done.

In 10 Mode, there are no remote response PDs. In 51 mode, the remote coserver will not receive any replicated responses (actual or marker) since there is no local AE to consume the response. In 20 Mode, the TSL Response Completion component 830 waits for a remote response PD only when a response marker was returned by the local DSL 750, since the component 830 needs an actual response for its local AE.

In all modes but 51 Mode, the TSL Response Completion component 830 discards the response markers and hands off all of the actual response PDs to the TSL Transaction Completion component 835. In 51 Mode, the completions by the local coserver (whether actual responses or marker responses) are held and timed until the TACKs are received from the 15 mode coserver.

The TSL Transaction Completion component 835 hands the response PDs to MEMX 730. MEMX 730 adds the response PDs to the freeze eligible list. In 10 Mode and 15 Mode, the MEMX 730 uses the freeze eligible list as the freeze list (i.e., since there is only one AE to coordinate, all completed I/O responses are given to AEK 720 on the next freeze cycle). In 51 Mode, the MEMX 730 is not active since there is no local AE. In 20 Mode, the MEMX 730 generates the freeze list by running the freeze protocol and also validates the response PDs that both coservers have received by comparing the header checksums contained in the response PDs.

In all modes of processing, the MEMX 730 produces a Transaction Acknowledge (TACK) for each of the response PDs included in the current freeze list. The TACKs indicate that the I/O subsystem has completed all operations related to the original transaction request. The TACKs are handed to a TSL TACK component 850 that coordinates the replication of TACKs based on the mode of the system. In 10 Mode, only the local coserver exists and no replication of TACKs is required. In 20 Mode, since MEMX 730 on both coservers used identical copies of the freeze list to produce the TACKs, no replication of TACKs is required. In 15 Mode, the local coserver replicates the TACK list to the remote coserver (which is in Mode 51) using COMX 780. In Mode 51, the TACK list is provided by the remote coserver using COMX 780.

The TSL 740 and the DSL 750 use the TACK list to mark the corresponding I/O transaction requests as completed. For those requests, all knowledge of the transaction can be removed from the I/O subsystem.

### SYSPAUSE

The message flow of FIG. 8 has been described in terms of steady state operations. When transitions in.the state of the system occur, the request and response PDs being processed must be re-evaluated to determine if the handling of the I/O operation is consistent with the new system state. A state change is the addition or removal of an AE, an I/O subsystem, or a coserver. As mentioned above, each of the TSL functional components includes an input queue and an output gate. These Matures are used to re-coordinate the TSL workload during a system transition.

During a system transition, the processing in the TSL is put in a suspended state called Syspause. In this state, each component of the TSL is responsible for completing the processing on the current PD, if any; setting the flag of the output gate upon completion of the PD processing, and accumulating all of the other incoming PDs in its input queue. At this point in time, TSL processing is suspended.

In addition, the MEMX 730 executes an AE pause that entails suspending the communications between the MEMX 730 and the AEX 720. The MEMX 730 then processes all available request PDs from the AEX and queues those processed request PDs into the TSL Transaction Request component 800. MEMX 730 also precesses the freeze eligible list from the TSL Transaction Completion component 835. MEMX 730 generates TACKs for the response PDs placed on the freeze list and queues the TACKs to the TSL TACK block 850. All uncompleted PDs on the eligible list are then discarded. Once the MEMX 730 has processed all request and response PDs, the MEMX 730 enters the AE pause state.

The coserver is considered to be in the Syspause state when all TSL components have set their respective output gate flags and the MEMX has indicated that it is in the AE pause state. Once the coserver is in the Syspause state, the state change is applied to the subsystem. In particular, after the state change, the status of all request and response PDs in the system must be examined to determine which ones must be reprocessed due to the change in the system state. In general, the TSL processes request PDs based upon the current system state, the DSL processes PDs based on I/O policies and device availability, and the TSL processes response PDs based on system state and DSL response flags. The state change may have rendered obsolete previous processing done by the TSL. If device access has been affected by the state change, then the DSL must adjust processing based on the device state change.

The request side of the TSL (i.e., components 800-820) re-evaluates the requests in its input queues based on the state change that just occurred. Each of the state changes requires a different adjustment to the queues. For example, a transition from 10 Mode to 15 Mode indicates that another I/O subsystem is being added to the system. Thus, while all request PDs prior to this change were processed assuming only one I/O subsystem and had their request mode flags marked by the TSL as being seen only by the local coserver, all request PDs currently in the TSL Transaction Request component 800 must now be replicated to the remote 51 coserver and marked as being processed by both coservers. This allows a smooth transition from 10 Mode to 15 Mode since every component that acts upon the request/response PD will modify its behavior based on both the current system state and the TSL request mode flags.

For 15 Mode to 20 Mode transitions, an AE is being added. This requires activating the TSL Request Validation component 815 and deactivating the TSL Request Replication component 810 and the TSL Replicated Request component 820. All entries in queue of the TSL Transaction Request component 800 are processed through the TSL Request Replication component 810 as if the state were still 15 Mode. Any subsequent PDs that are provided to the TSL Transaction Request component 800 will follow the 20 Mode path to the TSL Request Validation component 815.

For 20 Mode to 10 Mode transitions, all PDs in the queue for the TSL Transaction Request component 800 and the TSL Request Validation component 815 are marked as validated and are re-queued to the TSL DSL Request component 805. All PDs in the queue for the TSL DSL Request component 805 have their request flags marked as seen by this coserver since the other I/O subsystem is no longer available.

For 20 Mode to 15 Mode transitions, the operation needs to change from request validation between I/O subsystems (i.e., using TSL Request Validation component 815) to request replication (i.e., using TSL Request Replication component 810). This is accomplished by swapping the PD identifiers (sequence numbers) between I/O subsystems. The 51 mode coserver reports the last request PD it received from its own MEMX 730. The 15 Mode coserver makes the transition in processing from validation to replication starting at the next request PD. This may require re-queuing request PDs from the TSL Request Validation component 815 to the TSL Request Replication component 810.

For 15 Mode to 10 Mode transitions, all request replication stops and all request PDs queued in the TSL Request Replication component 810 are discarded. All request PDs in the TSL have their request mode flags changed to indicate that they only exist on the local coserver.

Skipping over the processing by the DSL 750, the TSL must re-evaluate the response PDs after a state change. The TSL re-queues all response PDs back to the TSL DSL Response component 825 and then reprocesses them based on the new state. Any replicated response PDs received through the TSL Replicated Response component 845 are discarded regardless of the queue in which they are currently located. Any replication needed by the new state will be created when the queue of the TSL DSL Response component 825 is reprocessed.

The processing by the DSL 750 fits between the request and response processing by the TSL. The DSL is responsible for providing device level failure recovery. Depending upon the device, a system state change may or may not affect what has been processed. Though the DSL can determine which devices are affected for each state change, this does not indicate which requests were improperly completed. The DSL tracks all outstanding I/O requests starting with the request from the TSL DSL Request component 805 until the I/O response is completed by the TSL TACK component 850. The DSL inserts a flush into the request stream for each device that may be affected by a state change. The flush is a marker that flows through the processing pipeline. With reference also to FIG. 7, the flush originates in DSL 750 and flows through provider 760, driver 770, provider 760, DSL 750, TSL 740, MEMX 730, TSL 740, and, finally, DSL 750. The flush requires that all requests issued earlier than the flush be processed before the flush is allow to propagate. When the flush has propagated back to the DSL 750 from the TSL TACK component 850, all outstanding requests for that device that have completed were preceded by a TACK. Any remaining requests that were not preceded by a TACK for that device are incomplete. The DSL must modify the device state and re-queue any incomplete requests back to the DSL. This may require moving entries from a TSL queue back into a DSL queue.

One example of this is an active/standby device like Ethernet. If the active Ethernet rail is lost due to a state change from 20 Mode to 10 Mode, and the local DSL 750 had responded with a response marker saying that the remote coserver would handle the Ethernet request, the remote coserver is removed from the system without co mpleting the Ethernet request. The response marker then is held in the TSL Response Co rnpletion component 830 until the actual response PD from the remote coserver arrives through the TSL Replicated Response component 845. If the TACK for the Ethernet request does not appear before the TACK for the Ethernet flush, the DSL takes the Ethernet request back and reprocesses the Ethernet request on the former standby Ethernet link. The TSL erases its transaction state knowledge and the response marker from the scoreboard for the Ethernet request and waits for the local DSL to return a new actual response PD. In summary, when a Syspause is requested, all TSL components are suspended by completing the processing of any current PD. Upon completion of PD processing, the Output Gate flag is set. All other incoming PDs are accumulated on the input queue. Next, an AE pause is requested of the MEMX. With the AE pause in effect, all system PD processing is suspended and the TSL and DSL adjust PD processing states according to the indicated system state change. System PD processing is then resumed by first requesting MEMX to resume AE processing, followed by having the TSL reprocess all outstanding PDs based on the new system state. The DSL performs a transaction pipeline flush on affected I/O devices that changed state due to the system state change and reprocesses any outstanding requests.

Implementations may include a method or process, an apparatus or system, or computer software on a computer medium. It will be understood that various modifications may be made without departing from the scope of the following claims.

## Claims

1. A fault tolerant/fault resilient computer system (100; 200; 300; 350; 410), comprising:
a first coserver (110; 210; 310; 310A; 415) comprising a first application environment (AE) processor (112; 212; 312a; 455) and a first I/O subsystem processor (114; 214; 314a; 457) on a first common motherboard, the first motherboard including a first shared memory (115; 315) that is shared by the first AE processor (112; 212; 312a; 455) and the first I/O subsystem processor (114; 214; 314a; 457); and
a second coserver (120; 220; 320; 320A; 420) comprising a second AE processor (122; 222; 322a; 460) and a second I/O subsystem processor (124; 224; 324a; 462) on a second common motherboard, the second motherboard including a second shared memory (125; 325) that is shared by the second AE processor (122; 222; 322a; 457) and the second I/O subsystem processor (124; 224; 324a; 462);
wherein:
each of the AE processors (112; 212; 312a; 455) has a clock that operates asynchronously to clocks of the other AE processor (122; 222; 322a; 460);
the AE processors (112, 122; 212, 222; 312a, 322a; 455, 460) operate in instruction lockstep;
the first and second I/O subsystem processors (114, 124; 214, 224; 314a, 324a; 457, 462) maintain operation of the AE processors in instruction lockstep through use of the first and second shared memories (115, 125; 315, 325) by:
having the first AE processor (112; 212; 312a; 455) write first synchronization information to the first shared memory (115; 315),
having the second AE processor (122; 222; 322a; 460) write second synchronization information to the second shared memory (125; 325),
having the first I/O subsystem processor (114; 214; 314a; 457) retrieve the first synchronization information from the first shared memory (115; 315),
having the second I/O subsystem processor (124; 224; 324a; 462) retrieve the second synchronization information from the second shared memory (125; 325) and provide the second synchronization information to the first I/O subsystem processor (114; 214; 314a; 457),
having the first I/O subsystem processor (114; 214; 314a; 457) use the first and second synchronization information to determine whether any adjustments must be made to operating states of the first and second AE processors (112, 122; 212, 222; 312a, 322a; 455, 460) to maintain operation of the first and second AE processors (112, 122; 212, 222; 312a, 322a; 455, 460) in instruction lockstep, and
having at least one of the first and second I/O subsystem processors (114, 124; 214, 224; 314a, 324a; 357, 362) make any needed adjustments to the operating states of the first and second AE processors (112, 122; 212, 222; 312a, 322a; 455, 460).

2. The computer system of claim 1, wherein the first AE processor (112; 212; 312a; 455) and the first I/O subsystem processor (114; 214; 314a; 457) communicate with each other through a first shared memory (115; 315) on the first common motherboard.

3. The computer system of claim 2, wherein the first AE processor (112; 212; 312a; 455) and the first I/O subsystem processor (114; 214; 314a; 457) also communicate with each other using a signalling mechanism that supports asynchronous communications between the first AE processor (112; 212; 312a; 455) and the first I/O subsystem processor (114; 214; 314a; 457).

4. The computer system of claim 3, wherein the signalling mechanism comprises an interrupt bus.

5. The computer system of any one of the preceding claims, wherein the first I/O subsystem processor (114; 214; 314a; 457) and the second I/O subsystem processor (124; 224; 324a; 462) communicate with each other through a communication link (190; 335; 450) and operate in a loosely coupled manner.

6. The computer system of any one of the preceding claims, wherein each of the first and second motherboards comprises an industry standard motherboard.

7. The computer system of any one of the preceding claims, wherein the first AE processor (112; 212; 312a; 455) and the first I/O subsystem processor (114; 214; 314a; 457) run different operating system software.

8. The computer system of claim 7, wherein the first AE processor (112; 212; 312a; 455) runs operating system software configured for use with computer systems that are not fault tolerant.

9. The computer system of any one of the preceding claims, wherein:
the first coserver (310) comprises a third AE processor (312b),
the second coserver (320) comprises a fourth AE processor (322b),
the system is configured to provide a first fault tolerant system using the first and second AE processors (312a, 322a) and the first and second I/O subsystems (314a, 324a), and
the system is further configured to provide a second fault tolerant system using the third and fourth AE processors (312b, 322b) and the first and second I/O subsystems (314a, 324a).

10. The computer system of any one of the preceding claims, wherein the first coserver (110; 210; 310; 310A; 415) is located in a first location and the second coserver (120; 220; 320; 320A; 420) is located in a second location, and including a communication link (190; 335; 450) connecting the first I/O subsystem processor (114; 214; 314a; 457) of the first coserver (110; 210; 310; 310A; 415) and the second I/O subsystem processor (124; 224; 324a; 462) of the second coserver (120; 220; 320; 320A; 420).

11. The computer system of claim 10, wherein the first location is spaced from the second location by more than 5 meters, optionally by more than 100 meters.

12. The computer system of any one of the preceding claims, wherein the first AE processor (112; 212; 312a; 455) comprises a first hyperthreaded processor that includes multiple logical processors and the first I/O subsystem processor (114; 214; 314a; 457) comprises a second hyperthreaded processor that includes multiple logical processors.

13. The computer system of any one of claims 1 to 11, wherein the first AE processor (112; 212; 312a; 455) comprises a first logical processor of a first hyperthreaded processor that includes multiple logical processors and the first I/O subsystem processor (114; 214; 314a; 457) comprises a second logical processor of the first hyperthreaded processor.

14. The computer system of any one of the preceding claims, wherein the first and second motherboards are included in blades of a blade-based computer system.

15. The computer system of claim 14, wherein the blade-based computer system includes additional blades that together provide one or more additional fault tolerant/fault resilient computer systems.

16. The computer system of any one of the preceding claims, wherein the first and second I/O subsystem processors (114, 124; 214, 224; 314a, 324a; 457, 462) maintain operation of the AE processors (112, 122; 212, 222; 312a, 322a; 455, 460) in instruction lockstep.

17. The computer system of any one of the preceding claims, wherein the first and second AE processors (112, 122; 212, 222; 312a, 322a; 455, 460) and the first and second I/O subsystem processors (114, 124; 214, 224; 314a, 324a, 457, 462) are further configured to maintain the first and second AE processors (112, 122; 212, 222; 312a, 322a; 455, 460) in instruction lockstep by:
having the first I/O subsystem processor (114; 214; 314a; 457) provide the retrieved first synchronization information to the second I/O subsystem processors (124; 224; 324a; 462) , and
having the second I/O subsystem processor (124; 224; 324a; 462) use the first and second synchronization information to determine whether any adjustments must be made to operating states of the first and second AE processors to maintain operation of the first and second AE processors (112, 122; 212, 222; 312a, 322a; 455, 460) to maintain operation of the first and second AE processors (112, 122; 212, 222; 312a, 322a; 455, 460) in instruction lockstep.

18. The computer system of any one of the preceding claims, wherein the first and second AE processors (112, 122; 212, 222; 312a, 322a; 455, 460) are configured to operate in a first mode in which the first and second AE processors (112, 122; 212, 22; 312a, 322a, 455, 460) operate in instruction lockstep and a second mode in which the first and second AE (112, 122; 212, 222; 312a, 322a; 455, 460) processors do not operate in instruction lockstep.

19. The computer system of claim 18, wherein the operating mode of the first AE processor changes (112; 212; 312a; 455) from the first mode to the second mode in response to I/O activity by the first AE processor (112; 212; 312a; 455) , or in response to processing of a predetermined quantum of instructions by the first AE processor (112; 212; 312a; 455) , or in response to entry into an idle processing state by an operating system implemented by the first AE processor (112; 212; 312a; 455).

20. The computer system of claim 19, wherein an interrupt is generated to change the operating mode of the first AE processor (112; 212; 312a; 455) from the first mode to the second mode in response to processing of a predetermined quantum of instructions by the first AE processor (112; 212; 312a; 455).

21. The computer system of claim 20, wherein the interrupt is generated when a performance counter that is decremented each time that an instruction is performed reaches zero.

22. A method of operating application environment (AE) processors (112, 122; 212, 222; 312a, 322a; 455, 460) in instruction lockstep in a fault tolerant/fault resilient computer system (100; 200; 300; 350; 410) that includes a first coserver (110; 210; 310; 310A; 415) having a first AE processor (112; 212; 312a; 455) and a first I/O subsystem processor (114; 214; 314a; 357) that communicate through a first shared memory (115; 315) located on a first common motherboard with the first AE processor (112; 212; 312a; 455) and the first I/O subsystem processor (114; 214; 314a; 357), and a second coserver (120; 220; 320; 320A; 420) having a second AE processor (122; 222; 322a; 460) and a second I/O subsystem processor (124; 224; 324a; 462) that communicate through a second shared memory (125; 325) located on a second common motherboard with the second AE processor (122; 222; 322a; 460) and the second I/O subsystem processor (124; 224; 324a; 462), the method comprising:
having the first AE processor (112; 312; 312a;455) write first synchronization information to the first shared memory (115; 315),
having the second AE processor (122; 222; 322a; 460) write second synchronization information to the second shared memory (125; 325),
having the first I/O subsystem processor (114; 214; 314a; 457) retrieve the first synchronization information from the first shared memory (115; 315),
having the second I/O subsystem processor (124; 224; 324a; 462) retrieve the second synchronization information from the second shared memory (125; 325) and provide the second synchronization information to the first I/O subsystem processor (114; 214; 314a; 457),
having the first I/O subsystem processor (114; 214; 314a; 457) use the first and second synchronization information to determine whether any adjustments must be made to operating states of the first and second AE processors (112, 122; 212, 222; 312a, 322a; 455, 460) to maintain operation of the first and second AE processors (112, 122; 212, 222; 312a, 322a; 455, 410) in instruction lockstep, and
having at least one of the first and second I/O subsystem processors (114, 124; 214, 224; 314a, 324a; 457, 462) make any needed adjustments to the operating states of the first and second AE processors (112, 122; 212, 222; 312a, 322a; 455, 460).

23. The method of claim 22, further comprising:
having the first I/O subsystem processor (114; 214; 314a; 457) provide the retrieved first synchronization information to the second I/O subsystem processor (124; 224; 324a; 462), and
having the second I/O subsystem processor (124; 224; 324a; 462) use the first and second synchronization information to determine whether any adjustments must be made to operating states of the first and second AE processors (112, 122; 212, 222; 312a, 322a; 455, 460) to maintain operation of the first and second AE processors (112, 122; 212, 222; 312a, 322a; 455, 460) in instruction lockstep.

24. The method of claim 22 or claim 23, further comprising changing an operating mode of the first AE processor (112; 212, 312a; 455) from a first mode in which the first and second AE processors (112, 122; 212, 222; 312a, 322a; 455, 460) operate in instruction lockstep to a second mode in which the first and second AE processors (112, 122; 212, 222; 312a, 322a; 455, 460) do not operate in instruction lockstep.

25. The method of claim 24, further comprising changing the operating mode of the first AE processor (112; 212; 312a; 455) from the first mode to the second mode in response to I/O activity by the first AE processor (112; 212; 312a; 455), in response to processing of a predetermined quantum of instructions by the first AE processor (112; 212; 312a; 455) , or in response to entry into an idle processing state by an operating system implemented by the first AE processor (112; 212: 312a; 455).

## Patentansprüche

1. Fehlertolerantes/fehlerelastisches Computersystem (100; 200; 300; 350; 410), das Folgendes umfasst:
einen ersten Coserver (110; 210; 310; 310A; 415), der einen ersten AE-(Application Environment)-Prozessor (112; 212; 312a; 455) und einen ersten E/A-Subsystem-Prozessor (114; 214; 314a; 457) auf einer ersten gemeinsamen Mutterplatine umfasst, wobei die erste Mutterplatine einen ersten Gemeinschaftsspeicher (115; 315) beinhaltet, der von dem ersten AE-Prozessor (112; 212; 312a; 455) und dem ersten E/A-Subsystem-Prozessor (114; 214; 314a; 457) gemeinsam genutzt wird; und
einen zweiten Coserver (120; 220; 320; 320A; 420), der einen zweiten AE-Prozessor (122; 222; 322a; 460) und einen zweiten E/A-Subsystem-Prozessor (124; 224; 324a; 462) auf einer zweiten gemeinsamen Mutterplatine umfasst, wobei die zweite Mutterplatine einen zweiten Gemeinschaftsspeicher (125; 325) aufweist, der vom zweiten AE-Prozessor (122; 222; 322a; 457) und vom zweiten E/A-Subsystem-Prozessor (124; 224; 324a; 462) gemeinsam genutzt wird;
wobei:
jeder der AE-Prozessoren (112; 212; 312a; 455) einen Takt hat, der asynchron zu Takten des anderen AE-Prozessors (122; 222; 322a; 460) arbeitet;
die AE-Prozessoren (112, 122; 212, 222; 312a, 322a; 465, 460) im Befehlsgleichtakt arbeiten;
der erste und der zweite E/A-Subsystem-Prozessor (114, 124; 214, 224; 314a, 324; 457, 462) den Betrieb der AE-Prozessoren im Befehlsgleichtakt durch Verwenden des ersten und zweiten Gemeinschaftsspeichers (115, 125; 315, 325) **dadurch** aufrechterhalten, dass sie Folgendes bewirken:
der erste AE-Prozessor (112; 212; 312a; 455) schreibt erste Synchronisationsinformationen auf den ersten Gemeinschaftsspeicher (115; 315),
der zweite AE-Prozessor (122; 222; 322a; 460) schreibt zweite Synchronisationsinformationen auf den zweiten Gemeinschaftsspeicher (125; 325),
der erste E/A-Subsystem-Prozessor (114; 214; 314a; 457) ruft die ersten Synchronisationsinformationen aus dem ersten Gemeinschaftsspeicher (115; 315) ab,
der zweite E/A-Subsystem-Prozessor (124; 224; 324a; 462) ruft die zweiten Synchronisationsinformationen aus dem zweiten Gemeinschaftsspeicher (125; 325) ab und sendet die zweiten Synchronisationsinformationen zum ersten E/A-Subsystem-Prozessor (114; 214; 314a; 457),
der erste E/A-Subsystem-Prozessor (114; 214; 314a; 457) benutzt die ersten und zweiten Synchronisationsinformationen zum Ermitteln, ob Einstellungen an Betriebszuständen des ersten und des zweiten AE-Prozessors (112, 122; 212, 222; 312a, 322a; 455, 460) vorgenommen werden müssen, um den Betrieb des ersten und des zweiten AE-Prozessors (112, 122; 212, 222; 312a, 322a; 455, 460) im Befehlsgleichtakt zu halten, und
der erste und/oder der zweite E/A-Subsystem-Prozessor (114, 124; 214, 224; 314a, 324a; 357, 362) nimmt/nehmen eventuell notwendige Einstellungen an den Betriebszuständen des ersten und des zweiten AE-Prozessors (112, 122; 212, 222; 312a, 322a; 455, 460) vor.

2. Computersystem nach Anspruch 1, wobei der erste AE-Prozessor (112; 212; 312a; 455) und der erste E/A-Subsystem-Prozessor (114; 214; 314a; 457) durch einen ersten Gemeinschaftsspeicher (114; 315) auf der ersten gemeinsamen Mutterplatine miteinander kommunizieren.

3. Computersystem nach Anspruch 2, wobei der erste AE-Prozessor (112; 212; 312a; 455) und der erste E/A-Subsystem-Prozessor (114; 214; 314a; 457) auch über einen Signalisierungsmechanismus miteinander kommunizieren, der asynchrone Kommunikationen zwischen dem ersten AE-Prozessor (112; 212; 312a; 455) und dem ersten E/A-Subsystem-Prozessor (114; 214; 314a; 457) unterstützt.

4. Computersystem nach Anspruch 3, wobei der Signalisierungsmechanismus einen Interrupt-Bus umfasst.

5. Computersystem nach einem der vorherigen Ansprüche, wobei der erste E/A-Subsystem-Prozessor (114; 214; 314a; 457) und der zweite E/A-Subsystem-Prozessor (124; 224; 324a; 462) über eine Kommunikationslink (190; 335; 450) miteinander kommunizieren und auf lose gekoppelte Weise arbeiten.

6. Computersystem nach einem der vorherigen Ansprüche, wobei die erste und die zweite Mutterplatine jeweils eine Mutterplatine nach Industriestandard umfassen.

7. Computersystem nach einem der vorherigen Ansprüche, wobei der erste AE-Prozessor (112; 212; 312a; 455) und der erste E/A-Subsystem-Prozessor (114; 214; 314a; 457) mit unterschiedlicher Betriebssystemsoftware arbeiten.

8. Computersystem nach Anspruch 7, wobei der erste AE-Prozessor (112; 212; 312a; 455) mit einer Betriebssystemsoftware arbeitet, die für die Verwendung mit Computersystemen konfiguriert ist, die nicht fehlertolerant sind.

9. Computersystem nach einem der vorherigen Ansprüche, wobei:
der erste Coserver (310) einen dritten AE-Prozessor (312b) umfasst,
der zweite Coserver (320) einen vierten AE-Prozessor (322b) umfasst,
das System so konfiguriert ist, dass es ein erstes fehlertolerantes System mit dem ersten und dem zweiten AE-Prozessor (312a, 322a) und dem ersten und dem zweiten E/A-Subsystem (314a, 324a) bildet, und
das System ferner so konfiguriert ist, dass es ein zweites fehlertolerantes System mit dem dritten und dem vierten AE-Prozessor (312b, 322b) sowie dem ersten und dem zweiten E/A-Subsystem (314a, 324a) bildet.

10. Computersystem nach einem der vorherigen Ansprüche, wobei sich der erste Coserver (110; 210; 310; 310A; 415) an einem ersten Ort und der zweite Coserver (120; 220; 320; 320A; 420) an einem zweiten Ort befinden, und mit einer Kommunikationsverbindung (190; 335; 450), die den ersten E/A-Subsystem-Prozessor (114; 214; 314a; 457) des ersten Coservers (110; 210; 310; 310A; 415) mit dem zweiten E/A-Subsystem-Prozessor (124; 224; 324a; 462) des zweiten Coservers (120; 220; 320; 320A; 420) verbindet.

11. Computersystem nach Anspruch 10, wobei der erste Ort von dem zweiten Ort um mehr als 5 Meter, optional um mehr als 100 Meter beabstandet ist.

12. Computersystem nach einem der vorherigen Ansprüche, wobei der erste AE-Prozessor (112; 212; 312a; 455) einen ersten Hyperthreaded-Prozessor umfasst, der mehrere Logikprozessoren beinhaltet, und der zweite E/A-Subsystem-Prozessor (114; 214; 314a; 457) einen zweiten Hyperthreaded-Prozessor umfasst, der mehrere Logikprozessoren beinhaltet.

13. Computersystem nach einem der Ansprüche 1 bis 11, wobei der erste AE-Prozessor (112; 212; 312a; 455) einen ersten Logikprozessor eines ersten Hyperthreaded-Prozessors umfasst, der mehrere Logikprozessoren beinhaltet, und der zweite E/A-Subsystem-Prozessor (114; 214; 314a; 457) einen zweiten Logikprozessor des ersten Hyperthreaded-Prozessors umfasst.

14. Computersystem nach einem der vorherigen Ansprüche, wobei die erste und die zweite Mutterplatine in Blades eines Blade-gestützten Computersystems enthalten sind.

15. Computersystem nach Anspruch 14, wobei das Bladegestützte Computersystem zusätzliche Blades beinhaltet, die zusammen ein oder mehrere zusätzliche fehlertolerante/ fehlerelastische Computersysteme bilden.

16. Computersystem nach einem der vorherigen Ansprüche, wobei der erste und der zweite E/A-Subsystem-Prozessor (114, 124; 214, 224; 314a, 324a; 457, 462) den Betrieb der AE-Prozessoren (112, 122; 212, 222; 312a, 322a; 455, 460) im Befehlsgleichtakt halten.

17. Computersystem nach einem der vorherigen Ansprüche, wobei der erste und der zweite AE-Prozessor (112, 122; 212, 222; 312a, 322a; 455, 460) und der erste und der zweite E/A-Subsystem-Prozessor (114, 124; 214, 224; 314a, 324a, 457, 462) ferner so konfiguriert sind, dass sie den ersten und den zweiten AE-Prozessor (112, 122; 212, 222; 312a, 322a; 455, 460) **dadurch** im Befehlsgleichtakt halten, dass sie Folgendes bewirken:
der erste E/A-Subsystem-Prozessor (114; 214; 314a; 457) sendet die abgerufenen ersten Synchronisationsinformationen zum zweiten E/A-Subsystem-Prozessor (124; 224; 324a; 462), und
der zweite E/A-Subsystem-Prozessor (124; 224; 324a; 462) benutzt die ersten und zweiten Synchronisationsinformationen zum Ermitteln, ob Einstellungen an Betriebszuständen des ersten und des zweiten AE-Prozessoren vorgenommen werden müssen, um den Betrieb des ersten und des zweiten AE-Prozessors (112, 122; 212, 222; 312a, 322a; 455, 460) aufrechtzuerhalten, um den Betrieb des ersten und des zweiten AE-Prozessors (112, 122; 212, 222; 312a, 322a; 455, 460) im Befehlsgleichtakt zu halten.

18. Computersystem nach einem der vorherigen Ansprüche, wobei der erste und der zweite AE-Prozessor (112, 122; 212, 222; 312a, 322a; 455, 460) so konfiguriert sind, dass sie in einem ersten Modus arbeiten, in dem der erste und der zweite AE-Prozessor (112, 122; 212, 222; 312a, 322a; 455, 460) im Befehlsgleichtakt arbeiten, und in einem zweiten Modus, in dem der erste und der zweite AE-Prozessor (112, 122; 212, 222; 312a, 322a; 455, 460) nicht im Befehlsgleichtakt arbeiten.

19. Computersystem nach Anspruch 18, wobei der Betriebsmodus des ersten AE-Prozessors (112; 212; 312a, 455) als Reaktion auf E/A-Aktivität durch den ersten AE-Prozessor (112; 212; 312a; 455) oder als Reaktion auf die Verarbeitung eines vorbestimmten Quantums an Befehlen durch den ersten AE-Prozessor (112; 212; 312a; 455) oder als Reaktion auf den Eintritt in einen Verarbeitungsruhezustand durch ein vom ersten AE-Prozessor (112; 212; 312a; 455) implementiertes Betriebssystem vom ersten Betriebsmodus in den zweiten Betriebsmodus wechselt.

20. Computersystem nach Anspruch 19, wobei eine Unterbrechung erzeugt wird, um den Betriebsmodus des ersten AE-Prozessors (112; 212; 312a; 455) als Reaktion auf eine Verarbeitung eines vorbestimmten Quantums an Befehlen durch den ersten AE-Prozessor (112; 212; 312a; 455) vom ersten Modus in den zweiten Modus zu wechseln.

21. Computersystem nach Anspruch 20, wobei die Unterbrechung erzeugt wird, wenn ein Ausführungszähler, der bei jeder Ausführung eines Befehls zurückgezählt wird, null erreicht.

22. Verfahren zum Betreiben von AE-(Application Environment)-Prozessoren (112, 122; 212, 222; 312a, 322a; 455, 460) im Befehlsgleichtakt in einem fehlertoleranten/ fehlerelastischen Computersystem (100; 200; 300; 350; 410), das einen ersten Coserver (110; 210; 310; 310A; 415) mit einem ersten AE-Prozessor (112; 212; 312a; 455) und einem ersten E/A-Subsystem-Prozessor (114; 214; 314a; 357), der durch einen ersten, auf einer ersten gemeinsamen Mutterplatine befindlichen Gemeinschaftsspeicher (115; 315) mit dem ersten AE-Prozessor (112; 212; 312a; 455) und dem ersten E/A-Subsystem-Prozessor (114; 214; 314a; 357) kommuniziert, und einen zweiten Coserver (120; 220; 320; 320A; 420) mit einem zweiten AE-Prozessor (122; 222; 322a; 460) und einem zweiten E/A-Subsystem-Prozessor (124; 224; 324a; 462) aufweist, die durch einen zweiten, auf einer zweiten gemeinsamen Mutterplatine befindlichen Gemeinschaftsspeicher (125; 325) mit dem zweiten AE-Prozessor (122; 222; 322a; 460) und dem zweiten E/A-Subsystem-Prozessor (124; 224; 324a; 462) kommunizieren, wobei das Verfahren die folgenden Schritte beinhaltet:
Bewirken, dass der erste AE-Prozessor (112; 312; 312a; 455) erste Synchronisationsinformationen auf den ersten Gemeinschaftsspeicher (115; 315) schreibt,
Bewirken, dass der zweite AE-Prozessor (122; 222; 322a; 460) zweite Synchronisationsinformationen auf den zweiten Gemeinschaftsspeicher (125; 325) schreibt,
Bewirken, dass der erste E/A-Subsystem-Prozessor (114; 214; 314a; 457) die ersten Synchronisationsinformationen vom ersten Gemeinschaftsspeicher (115; 315) abruft,
Bewirken, dass der zweite E/A-Subsystem-Prozessor (124; 224; 324a; 462) die zweiten Synchronisationsinformationen vom zweiten Gemeinschaftsspeicher (125; 325) abruft und die zweiten Synchronisationsinformationen zum ersten E/A-Subsystem-Prozessor (114; 214; 314a; 457) sendet,
Bewirken, dass der erste E/A-Subsystem-Prozessor (114; 214; 314a; 457) die ersten und zweiten Synchronisationsinformationen zum Ermitteln benutzt, ob Einstellungen an Betriebszuständen des ersten und des zweiten AE-Prozessors (112, 122; 212, 222; 312a; 322a; 455, 460) vorgenommen werden müssen, um den Betrieb des ersten und des zweiten AE-Prozessors (112, 122; 212, 222; 312a, 322a; 455, 410) im Befehlsgleichtakt zu halten, und
Bewirken, dass der erste und/oder der zweite E/A-Subsystem-Prozessor (114, 124; 214, 224; 314a, 324a; 457, 462) eventuell notwendige Einstellungen an den Betriebszuständen des ersten und des zweiten AE-Prozessors (112, 122; 212, 222; 312a, 322a; 455, 460) vornimmt/vornehmen.

23. Verfahren nach Anspruch 22, das ferner die folgenden Schritte beinhaltet:
Bewirken, dass der erste E/A-Subsystem-Prozessor (114; 214; 314a; 457) die abgerufenen ersten Synchronisationsinformationen zum zweiten E/A-Subsystem-Prozessor (124; 224; 324a; 462) sendet, und
Bewirken, dass der zweite E/A-Subsystem-Prozessor (124; 224; 324a; 462) die ersten und zweiten Synchronisationsinformationen zum Ermitteln benutzt, ob Einstellungen an Betriebszuständen des ersten und des zweiten AE-Prozessors (112, 122; 212, 222; 312a, 322a; 455, 460) vorgenommen werden müssen, um den Betrieb des ersten und des zweiten AE-Prozessors (112, 122; 212, 222; 312a, 322a; 455, 460) im Befehlsgleichtakt zu halten.

24. Verfahren nach Anspruch 22 oder Anspruch 23, das ferner das Wechseln eines Betriebsmodus des ersten AE-Prozessors (112; 212, 312a; 455) von einem ersten Modus, in dem der erste und der zweite AE-Prozessor (112, 122; 212, 222; 312a, 322a; 455, 460) im Befehlsgleichtakt arbeiten, in einen zweiten Modus beinhaltet, in dem der erste und der zweite AE-Prozessor (112, 122; 212, 222; 312a, 322a; 455, 460) nicht im Befehlsgleichtakt arbeiten.

25. Verfahren nach Anspruch 24, das ferner das Wechseln des Betriebsmodus des ersten AE-Prozessors (112; 212; 312a; 455) vom ersten Modus in den zweiten Modus als Reaktion auf E/A-Aktivität durch den ersten AE-Prozessor (112; 212; 312a; 455) , als Reaktion auf die Verarbeitung eines vorbestimmten Quantums an Befehlen durch den ersten AE-Prozessor (112; 212; 312a; 455) oder als Reaktion auf den Eintritt in einen Verarbeitungsruhezustand durch ein vom ersten AE-Prozessor (112; 212; 312a; 455) implementiertes Betriebssystem beinhaltet.

## Revendications

1. Système d'ordinateurs tolérant aux pannes/résilient aux pannes (100 ; 200 ; 300 ; 350 ; 410), comprenant :
un premier coserveur (110 ; 210 ; 310 ; 310A ; 415) comprenant un premier processeur d'environnement d'application (AE) (112 ; 212 ; 312a ; 455) et un premier processeur de sous-système E/S (114 ; 214 ; 314a ; 457) sur une première carte mère commune, la première carte mère comportant une première mémoire partagée (115 ; 315) qui est partagée entre le premier processeur AE (112 ; 212 ; 312a ; 455) et le premier processeur de sous-système E/S (114 ; 214 ;. 314a ; 457) ; et
un second coserveur (120 ; 220 ; 320 ; 320A ; 420) comprenant un deuxième processeur AE (122 ; 2212 ; 322a ; 460) et un second processeur de sous-système E/S (124 ; 224 ; 324a ; 462) sur une seconde carte mère commune, la seconde carte mère comportant une seconde mémoire partagée (125 ; 325) qui est partagée entre le deuxième processeur AE (122 ; 222 ; 322a ; 457) et le second processeur de sous-système E/S (124 ; 224. 324a ; 462) ;
dans lequel :
chacun des processeurs AE (112 ; 212 ; 312a ; 455) a une horloge qui fonctionne de façon asynchrone par rapport aux horloges de l'autre processeur AE (122 ; 222 ; 322a ; 460) ;
les processeurs AE (112, 122 ; 212, 222 ; 312a, 322a ; 455, 460) fonctionnent en mode d'instructions synchrone ;
les premier et second processeurs de sous-système E/S (114, 124 ; 214, 224 ; 314a, 324a ; 457, 462) maintiennent le fonctionnement des processeurs AE en mode d'instructions synchrone par l'utilisation des première et seconde mémoires partagées (115, 125 ; 315, 325) en :
faisant en sorte que le premier processeur AE (112 ; 212 ; 312a ; 455) écrive des premières informations de synchronisation dans la première mémoire partagée (115 ; 315),
faisant en sorte que le second processeur AE (122 ; 222 ; 322a ; 460) écrive des secondes informations de synchronisation dans la seconde mémoire partagée (125 ; 325),
faisant en sorte que le premier processeur de sous-système E/S (114 ; 214 ; 314a ; 457) recouvre les premières informations de synchronisation dans la première mémoire partagée (115 ; 315),
faisant en sorte que le second processeur de sous-système E/S (124 ; 224 ; 324a ; 462) recouvre les secondes informations de synchronisation dans la seconde mémoire partagée (125 ; 325) et fournisse les secondes informations de synchronisation au premier processeur de sous-système E/S (114 ; 214 ; 314a ; 457),
faisant en sorte que le premier processeur de sous-système E/S (114 ; 214 ; 314a ; 457) utilise les premières et secondes informations de synchronisation pour déterminer s'il convient ou non d'apporter des changements aux états opérationnels des premier et second processeurs AE (112, 122 ; 212, 222 ; 312a, 322a ; 455, 460) afin de maintenir le fonctionnement des premier et deuxième processeurs AE (112, 122 ; 212, 222 ; 312a, 322a ; 455, 460) en mode d'instructions synchrone, et
faisant en sorte que les premier et second processeurs de sous-système E/S (114, 124 ; 214 ; 224 ; 314a ; 324a ; 357, 362) effectuent tous changements nécessaires des états opérationnels des premier et deuxième processeurs AE (112, 122 ; 212, 222 ; 312a, 322a ; 455, 460).

2. Système d'ordinateurs selon la revendication 1, dans lequel le premier processeur AE (112 ; 212 ; 312a ; 455) et le premier processeur de sous-système E/S (114 ; 214 ; 314a ; 457) communiquent l'un avec l'autre par le biais d'une première mémoire partagée (115 ; 315) sur la première carte mère principale.

3. Système d'ordinateurs selon la revendication 2, dans lequel le premier processeur AE (112 ; 212 ; 312a ; 455) et le premier processeur de sous-système E/S (114 ; 214 ; 314a ; 457) communiquent également l'un avec l'autre au moyen d'un mécanisme de signalisation qui supporte les communications asynchrones entre le premier processeur AE (112 ; 212 ; 312a ; 455) et le premier processeur de sous-système E/S (114 ; 214 ; 314a ; 457).

4. Système d'ordinateurs selon la revendication 3, dans lequel le mécanisme de signalisation comprend un bus d'interruption.

5. Système d'ordinateurs selon l'une quelconque des revendications précédentes, dans lequel le premier processeur de sous-système E/S (114 ; 214 ; 314a ; 457) et le second processeur de sous-système E/S (124 ; 224 ; 324a ; 462) communiquent l'un avec l'autre par le biais d'une liaison de communication (190 ; 335 ; 450) et fonctionnent selon un couplage lâche.

6. Système d'ordinateurs selon l'une quelconque des revendications précédentes, dans lequel chacune des première et seconde cartes mères comprend une carte mère standard de l'industrie.

7. Système d'ordinateurs selon l'une quelconque des revendications précédentes, dans lequel le premier processeur AE (112 ; 212 ; 312a ; 455) et le premier processeur de sous-système E/S (114 ; 214 ; 314a ; 457) exécutent des logiciels de système d'exploitation différents.

8. Système d'ordinateurs selon la revendication 7, dans lequel le premier processeur AE (112 ; 212 ; 312a ; 455) exécute un logiciel de système d'exploitation configuré pour être utilisé avec des systèmes d'ordinateurs qui ne sont pas tolérants aux pannes.

9. Système d'ordinateurs selon l'une quelconque des revendications précédentes, dans lequel :
le premier coserveur (310) comprend un troisième processeur AE (312b),
le second coserveur (320) comprend un quatrième processeur AE (322b),
le système est configuré pour fournir un premier système tolérant aux pannes utilisant les premier et deuxième processeurs AE (312a, 322a) et les premier et second sous-systèmes E/S (314a, 324a), et
le système est configuré en outre pour fournir un second système tolérant aux pannes utilisant les troisième et quatrième processeurs AE (312b, 322b) et les premier et second sous-systèmes E/S (314a, 324a).

10. Système d'ordinateurs selon l'une quelconque des revendications précédentes, dans lequel le premier coserveur (110, ;210 ; 310 ; 310A ; 415) est situé à un premier emplacement et le second coserveur (120 ; 220 ; 320 ; 320A ; 420) est situé à un second emplacement, et comportant une liaison de communication (190 ; 335 ; 450) reliant le premier processeur de sous-système E/S (114 ; 214 ; 314a ; 457) du premier coserveur (110 ; 210 ; 310 ; 310A ; 415) et le second processeur de sous-système E/S (124 ; 224. 324a ; 462) du second coserveur (120 ; 220 ; 320 ; 320A ; 420).

11. Système d'ordinateurs selon la revendication 10, dans lequel le premier emplacement est espacé du second emplacement par plus de 5 mètres, optionnellement par plus de 100 mètres.

12. Système d'ordinateurs selon l'une quelconque des revendications précédentes, dans lequel le premier processeur AE (112 ; 212 ; 312a ; 455) comprend un premier processeur à hyper-filières qui comporte de multiples processeurs logiques et le premier processeur de sous-système E/S (114 ; 214 ; 314a ; 457) comprend un second processeur à hyper-filières qui comporte de multiples processeurs logiques.

13. Système d'ordinateurs selon l'une quelconque des revendications 1 à 11, dans lequel le premier processeur AE (112 ; 212 ; 312a ; 455) comprend un premier processeur logique d'un premier processeur à hyper-filières qui comporte de multiples processeurs logiques et le premier processeur de sous-système E/S (114 ; 214 ; 314a ; 457) comprend un second processeur logique du premier processeur à hyper-filières.

14. Système d'ordinateurs selon l'une quelconque des revendications précédentes, dans lequel les première et seconde cartes mètres sont incluses dans des lames d'un système d'ordinateurs à lames.

15. Système d'ordinateurs selon la revendication 14, dans lequel le système d'ordinateurs à lames comporte des lames supplémentaires qui fournissent ensemble des systèmes d'ordinateurs tolérants aux pannes/résilients aux pannes supplémentaires.

16. Système d'ordinateurs selon l'une quelconque des revendications précédentes, dans lequel les premier et second processeurs de sous-système E/S ( 114, 124 ; 214, 224 ; 314a, 324a ; 457, 462) maintiennent le fonctionnement des premier et deuxième processeurs AE (112, 122 ; 212, 222 ; 312a, 322a ; 455, 460) en mode d'instructions synchrone.

17. Système d'ordinateurs selon l'une quelconque des revendications précédentes, dans lequel les premier et deuxième processeurs AE (112, 122 ; 212, 222 ; 312a, 322a ; 455, 460) et les premier et second processeurs de sous-système E/S (114, 124 ; 214, 224 ; 314a, 324a ; 457, 462) sont en outre configurés pour maintenir les premier et deuxième processeurs AE (112, 122 ; 212, 222 ; 312a, 322a ; 455, 460) en mode d'instructions synchrone en :
faisant en sorte que le premier processeur de sous-système E/S (114 ; 214 ; 314a ; 457) fournisse les premières informations de synchronisation recouvrées au second processeur de sous-système E/S (124 ; 224 ; 324a ; 482), et
faisant en sorte que le second processeur de sous-système E/S (124 ; 224 ; 324a ; 462) utilise les premières et secondes informations de synchronisation pour déterminer s'il convient ou non d'apporter des changements aux états opérationnels des premier et second processeurs AE afin de maintenir le fonctionnement des premier et deuxièmes processeurs AE (112, 122 ; 212, 222 ; 312a, 322a ; 455, 460) en mode d'instructions synchrone.

18. Système d'ordinateurs selon l'une quelconque des revendications précédentes, dans lequel les premier et deuxièmes processeurs AE (112, 122 ; 212, 222 ; 312a, 322a ; 455, 460) sont configurés pour fonctionner dans un premier mode dans lequel les premier et deuxième processeurs AE (112, 122 ; 212, 222 ; 312a, 322a ; 455, 460) fonctionnent en mode d'instructions synchrone et un second mode dans lequel les premier et deuxième processeurs AE (112, 122 ; 212, 222 ; 312a, 322a ; 455, 460) ne fonctionnent pas en mode d'instructions synchrone.

19. Système d'ordinateurs selon la revendication 18, dans lequel le mode opérationnel du premier processeur AE (112 ; 212 ; 312a ; 455) passe du premier mode au second mode en réponse à l'activité E/S par le premier processeur AE (112 ; 212 ; 312a ; 455), ou en réponse au traitement d'une quantité prédéterminée d'instructions par le premier processeur AE (112 ; 212 ; 312a ; 455), ou en réponse à une entrée dans un état de traitement inactif par un système d'exploitation mis en oeuvre par le premier processeur AE (112 ; 212 ; 312a ; 455).

20. Système d'ordinateurs selon la revendication 19, dans lequel une interruption est générée pour changer le mode opérationnel du premier processeur AE (112 ; 212 ; 312a ; 455) du premier mode au second mode en réponse au traitement d'une quantité prédéterminée d'instructions par le premier processeur AE (112 ; 212 ; 312a ; 455).

21. Système d'ordinateurs selon la revendication 20, dans lequel l'interruption est générée quand un compteur de performance qui est décrémenté chaque fois qu'une instruction est exécutée atteint zéro.

22. Procédé d'exploitation de processeurs d'environnement d'application (AE) (112, 122 ; 212, 222 ; 312a, 322a ; 455, 460) en mode d'instructions synchrone dans un système d'ordinateurs tolérant aux pannes/résilient aux pannes (100 ; 200 ; 300 ; 350 ; 410) qui comporte :
un premier coserveur (110 ; 210 ; 310 ; 310A ; 415) ayant un premier processeur AE (112 ; 212 ; 312a ; 455) et un premier processeur de sous-système E/S (114 ; 214 ; 314a ; 357) qui communiquent par le biais d'une première mémoire partagée (115 ; 315) située sur une première carte mère commune au premier processeur AE (112 ; 212 ; 312a ; 455) et au premier processeur de sous-système E/S (114 ; 214 ; 314a ; 357), et un second coserveur (120 ; 220 ; 320 ; 320A ; 420) comprenant un deuxième processeur AE (122 ; 222 ; 322a ; 460) et un second processeur de sous-système E/S (124 ; 224 ; 324a ; 462) qui communiquent par le biais d'une seconde mémoire partagée (125 ; 325) située sur une seconde carte mère commune au deuxième processeur AE (122 ; 222 ; 322a ; 457) et au deuxième processeur de sous-système E/S (124 ; 224 ; 324a ; 462), le procédé comprenant :
l'écriture par le premier processeur AE (112 ; 212 ; 312a ; 455) de premières informations de synchronisation dans la première mémoire partagée (115 ; 315),
l'écriture par le deuxième processeur AE (122 ; 222 ; 322a ; 460) de secondes informations de synchronisation dans la seconde mémoire partagée (125 ; 325),
le recouvrement par le premier processeur de sous-système E/S (114 ; 214 ; 314a 457) des premières informations de synchronisation dans la première mémoire partagée (115 ; 315),
le recouvrement par le second processeur de sous-système E/S (124 ; 224 ; 324a ; 462) des secondes informations de synchronisation dans la seconde mémoire partagée (125 ; 325) et la fourniture par le second processeur de sous-système E/S (124 ; 224 ; 324a ; 462) des secondes informations de synchronisation au premier processeur de sous-système E/S (114 ; 214 ; 314a ; 457),
l'utilisation par le premier processeur de sous-système E/S (114 ; 214 ; 314a ; 457) des premières et secondes informations de synchronisation pour déterminer s'il convient ou non d'apporter des changements aux états opérationnels des premier et second processeurs AE (112, 122 ; 212, 222 ; 312a, 322a ; 455, 460) afin de maintenir le fonctionnement des premier et second processeurs AE (112, 122 ; 212, 222 ; 312a, 322a ; 455, 460) en mode d'instructions synchrone, et
l'exécution par au moins l'un des premier et second processeurs de sous-système E/S (114, 124 ; 214 ; 224 ; 314a ; 324a ; 457, 462) de tous changements nécessaires des états opérationnels des premier et deuxième processeurs AE (112, 122 ; 212, 222 ; 312a, 322a ; 455, 460).

23. Procédé selon la revendication 22, comprenant en outre :
la fourniture par le premier processeur de sous-système E/S (114 ; 214 ; 314a ; 457) des premières informations de synchronisation recouvrées au second processeur de sous-système E/S (124 ; 224 ; 324a ; 462), et
l'utilisation par le second processeur de sous-système E/S (124 ; 224 ; 324a ; 462) des premières et secondes informations de synchronisation pour déterminer s'il convient ou non d'apporter des changements aux états opérationnels des premier et deuxième processeurs AE (112, 122 ; 212, 222 ; 312a, 322a ; 465, 460) afin de maintenir le fonctionnement des premier et deuxièmes processeurs AE (112, 122 ; 212, 222 ; 312a, 322a ; 465, 460) en mode d'instructions synchrone.

24. Procédé selon la revendication 22 ou la revendication 23, comprenant en outre le changement d'un mode opérationnel du premier processeur AE (112 ; 212 ; 312a ; 455) d'un premier mode dans lequel les premier et deuxième processeurs AE (112, 122 ; 212, 222 ; 312a, 322a ; 455, 460) fonctionnent en mode d'instructions synchrone et un second mode dans lequel les premier et deuxième processeurs AE (112, 122 ; 212, 222 ; 312a, 322a ; 455, 460) ne fonctionnent pas en mode d'instructions synchrone.

25. Procédé selon la revendication 24, comprenant en outre le changement du mode opérationnel du premier processeur AE (112 ; 212 ; 312a ; 455) du premier mode au second mode en réponse à l'activité E/S par le premier processeur AE (112 ; 212 ; 312a ; 455), en réponse au traitement d'une quantité prédéterminée d'instructions par le premier processeur AE (112 ; 212 ; 312a ; 455) ou en réponse à l'entrée dans un état de traitement inactif par un système d'exploitation mis en oeuvre par le premier processeur AE (112 ; 212 ; 312a ; 455).
